# EUROPEAN PATENT APPLICATION

(11) **EP 4 220 474 A1**
(43) Date of publication of application: **02.08.2023**
(21) Application number: 23167732.9
(22) Date of filing: 18.12.2019
(51) Int. Cl.: G06F 40/232, G06F 40/247, G06F 40/279, G06F 40/30, G06F 40/53, G06N 3/00

(54) **INFORMATION PROCESSING PROGRAM, INFORMATION PROCESSING METHOD, AND INFORMATION PROCESSING DEVICE**

(62) Divisional of application: 19956285.1
(71) Applicant: FUJITSU LIMITED, Kawasaki-shi, Kanagawa 211-8588 (JP)
(72) Inventor: Kataoka, Masahiro, Kawasaki-shi, Kanagawa, 211-8588 (JP); Hori, Shinji, Kawasaki-shi, Kanagawa, 211-8588 (JP); Matsumura, Ryo, Kawasaki-shi, Kanagawa, 211-8588 (JP); Takebe, Nobuyuki, Kawasaki-shi, Kanagawa, 211-8588 (JP)
(74) Representative: Hoffmann Eitle

(57) **Abstract**

An information processing device extracts first sentence vectors of a plurality of first sentences included in a first text. The information processing device specifies a second sentence of which a tendency of a vector is different from that of the plurality of first sentences from among the plurality of second sentences on the basis of the extracted first sentence vector and second sentence vectors of the plurality of second sentences included in a second text. The information processing device extracts a word that matches a homophone or a conjunction stored in a storage device from among words included in the specified second sentence. The information processing device generates a second sentence of which the tendency of the vector is the same as or similar to the plurality of first sentences by converting the extracted word into a word associated with the homophone or the conjunction stored in the storage device.

## Description

### FIELD

The present invention relates to an information processing program or the like.

### BACKGROUND

Related art includes the Word2vec (Skip-Gram Model or CBOW) or the like, for analyzing a text or a sentence (hereinafter, simply referred to as sentence) and expressing each word included in the sentence as a vector. There is a characteristic that words mutually having similar meanings have similar vector values even though the words have different spellings. In the following description, a vector of a word is referred to as a "word vector".

Furthermore, a technique exists that is called Poincare Embeddings for embedding a word in a Poincare space and specifying a word vector. For example, with the Word2vec, a word vector is expressed in 200 dimensions. However, with the Poincare Embeddings, accuracy of a word vector belonging to the same concept can be improved, and the Poincare Embeddings attracts attention as a dimension compression technique.

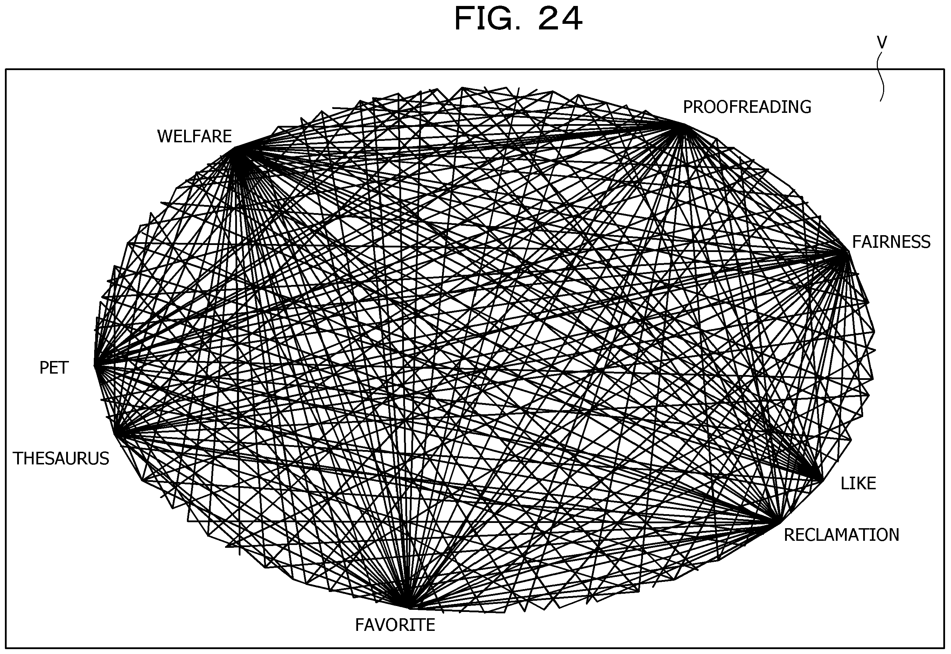

FIG. 24 is a diagram illustrating an example of a position of a word in a vector space expressed by the Word2vec. In the example illustrated in FIG. 24, each position of each of words "proofreading", "fairness", "like", "reclamation", "favorite", "thesaurus", "pet", and "welfare" in a vector space V is illustrated. Among the words in the vector space V expressed by the Word2vec, although "like", "favorite", and "pet" are words having similar meanings, the positions of the words are away from each other.

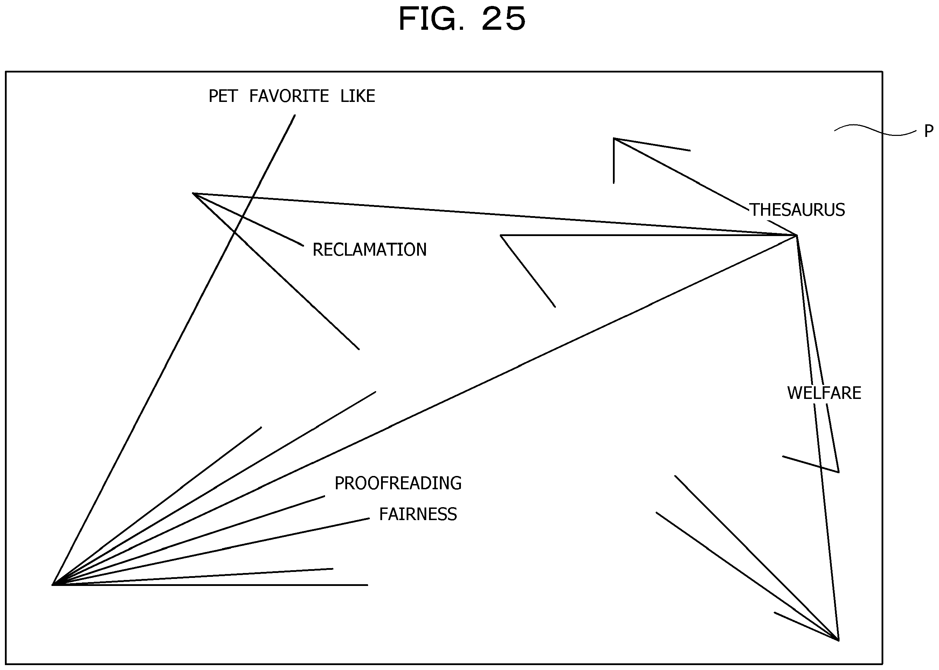

FIG. 25 is a diagram illustrating an example of a position of a word in a Poincare space expressed by the Poincare Embeddings. In the example illustrated in FIG. 25, each position of each of the words "proofreading", "fairness", "like", "reclamation", "favorite", "thesaurus", "pet", and "welfare" in a Poincare space P is illustrated. Unlike the example of the vector space V illustrated in FIG. 24, in the Poincare space P in FIG. 25, word vectors of "like", "favorite", and "pet" that have similar meanings are arranged at adjacent positions, and it can be said that the accuracy of the word vectors is improved as compared with the Word2vec.

Note that, in a case where a model that translates a Japanese sentence into an English sentence is machine learned, recurrent neural network (RNN) machine learning is performed using teacher data in which a word vector of each word included in the Japanese sentence is associated with a word vector of each word included in the English sentence.

### CITATION LIST

### [PATENT DOCUMENT]

Patent Document 1: Japanese Laid-open Patent Publication No. 2017-142746
Patent Document 2: Japanese Laid-open Patent Publication No. 2019-057095
Patent Document 3: Japanese Laid-open Patent Publication No. 2019-046048

### SUMMARY

### [TECHNICAL PROBLEM]

As described with reference to FIG. 25, the word vectors of the words mutually having the similar meanings are approximated values. However, because homophones have different meanings, each word vector has a dispersed value. For example, "proofreading", "fairness", "reclamation", and "welfare" are homophones, have the same pronunciation, and have different meanings.

Therefore, when a plurality of words included in a sentence includes a word conversion error (Chinese character conversion error or the like), a vector of the sentence is different compared to a vector of an original sentence. In the following description, a vector of a sentence is referred to as a "sentence vector". The sentence vector is specified by accumulating word vectors of words included in a sentence. For example, if the sentence vector is different from the original sentence vector, when translation or the like is performed, it is not possible to obtain a correct translated sentence.

In one aspect, an object of the present invention is to provide an information processing program, an information processing method, and an information processing device that can proofread a text on the basis of a transition of a sentence vector.

### [SOLUTION TO PROBLEM]

In a first idea, a computer executes the following processing. The computer extracts first sentence vectors of a plurality of first sentences included in a first text. The computer specifies a second sentence of which a vector tendency is different from that of the plurality of first sentences from among the plurality of second sentences on the basis of the extracted first sentence vector and second sentence vectors of the plurality of second sentences included in a second text. The computer extracts a word that matches a homophone or a conjunction stored in a storage device from words included in the specified second sentence. The computer generates a second sentence of which the vector tendency is the same as or similar to the plurality of first sentences by converting the extracted word into a word associated with the homophone or the conjunction stored in the storage device.

According to an aspect of the embodiments, an information processing program for causing a computer to execute processing includes extracting first sentence vectors of a plurality of first sentences included in a first text; specifying a second sentence of which a tendency of a vector is different from the plurality of first sentences from among a plurality of the second sentences on the basis of the extracted first sentence vectors and second sentence vectors of the plurality of second sentences included in a second text; extracting a word that matches a homophone or a conjunction stored in a storage device from among words included in the specified second sentence; and generating a second sentence of which a tendency of a vector is the same as or similar to the vectors of the plurality of first sentences by converting the extracted word into a word associated with the homophone or the conjunction stored in the storage device.

### [ADVANTAGEOUS EFFECTS OF INVENTION]

It is possible to proofread a text on the basis of a transition of a sentence vector.

### BRIEF DESCRIPTION OF DRAWINGS

FIG. 1 is a diagram (1) for explaining an example of processing of an information processing device according to a first embodiment;
FIG. 2 is a diagram (2) for explaining an example of the processing of the information processing device according to the first embodiment;
FIG. 3 is a diagram (3) for explaining an example of the processing of the information processing device according to the first embodiment;
FIG. 4 is a functional block diagram illustrating a configuration of the information processing device according to the first embodiment;
FIG. 5 is a diagram illustrating an example of a data structure of aggregated data;
FIG. 6 is a diagram illustrating an example of a data structure of a homophone vector table;
FIG. 7 is a diagram illustrating an example of a data structure of a homophone table;
FIG. 8 is a diagram for explaining processing for calculating a text vector;
FIG. 9 is a flowchart illustrating a processing procedure of the information processing device according to the first embodiment;
FIG. 10 is a diagram for explaining an example of other processing of the information processing device;
FIG. 11 is a diagram for explaining an example of processing of an information processing device according to a second embodiment;
FIG. 12 is a functional block diagram illustrating a configuration of the information processing device according to the second embodiment;
FIG. 13 is a diagram illustrating an example of a data structure of a conjunction table;
FIG. 14 is a diagram illustrating an example of a data structure of teacher data according to the second embodiment.
FIG. 15 is a diagram illustrating an example of a data structure of a transition table;
FIG. 16 is a flowchart illustrating a processing procedure of the information processing device according to the second embodiment;
FIG. 17 is a diagram for explaining an example of processing of an information processing device according to a third embodiment;
FIG. 18 is a functional block diagram illustrating a configuration of the information processing device according to the third embodiment;
FIG. 19 is a diagram illustrating an example of a data structure of teacher data according to the third embodiment;
FIG. 20 is a diagram illustrating an example of a data structure of a transition table according to the third embodiment;
FIG. 21 is a flowchart illustrating a processing procedure of the information processing device according to the third embodiment;
FIG. 22 is a diagram illustrating an example of a hardware configuration of a computer that implements functions similar to those of the information processing device according to the first embodiment;
FIG. 23 is a diagram illustrating an example of a hardware configuration of a computer that implements functions similar to those of the information processing devices according to the second and third embodiments;
FIG. 24 is a diagram illustrating an example of a position of a word in a vector space expressed by the Word2vec; and
FIG. 25 is a diagram illustrating an example of a position of a word in a Poincare space expressed by Poincare Embeddings.

### DESCRIPTION OF EMBODIMENTS

Hereinafter, embodiments of an information processing program, an information processing method, and an information processing device disclosed in the present application will be described in detail with reference to the drawings. Note that the embodiments do not limit the present invention.

### [First Embodiment]

A text generally includes a plurality of sentences each of which has a meaning. Then, the meaning transitions like a "flow" in the unit of sentences as in, for example, a syllogism or introduction, development, turn, and conclusion. Therefore, when RNN machine learning is performed with particles of a vector of a sentence and a text that are higher than particles of a word vector and a sentence, a transition of an appropriate sentence vector can be evaluated.

Therefore, when a plurality of words included in a sentence includes a word conversion error (kana-Chinese character conversion error or the like), the vector of the sentence deviates (differs) from a transition of a vector of an original sentence. Therefore, proofreading of a homophone, a conjunction, or the like can be performed using the transition of the sentence vector. Similarly, a similarity between a plurality of texts can be evaluated.

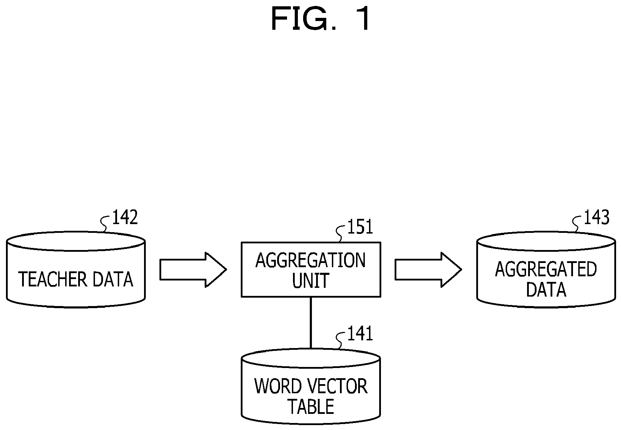

Next, an example of processing of an information processing device according to a first embodiment will be described. FIGs. 1, 2 and 3 are diagrams for explaining an example of the processing of the information processing device according to the first embodiment. FIG. 1 will be described. An aggregation unit 151 of the information processing device generates aggregated data 143 on the basis of a word vector table 141 and teacher data 142.

The word vector table 141 is a table that associates a word with a vector of the word. In the following description, the vector of the word is referred to as a "word vector".

The teacher data 142 includes data of a plurality of texts. Data of one text includes data of a plurality of sentences. Data of one sentence includes data of a plurality of words. In the following description, the data of the text is simply referred to as a "text". The data of the sentence is simply referred to as a "sentence". The data of the word is simply referred to as a "word". The text in the teacher data 142 corresponds to a "first text". A sentence included in the first text corresponds to a "first sentence".

The aggregation unit 151 executes processing for calculating a vector of a text and processing for generating the aggregated data 143. An example of the processing in which the aggregation unit 151 calculates a vector of a text will be described. The aggregation unit 151 selects a single text from among the plurality of texts included in the teacher data 142 and extracts a plurality of sentences included in the selected text. For example, the aggregation unit 151 scans the text and extracts a portion delimited by punctuations as a sentence.

The aggregation unit 151 selects a single sentence from among the plurality of extracted sentences and performs morphological analysis on the selected sentence so as to specify a plurality of words included in the sentence. The aggregation unit 151 compares the specified word with the word vector table 141, specifies a word vector of each word, and accumulates the specified word vectors so as to calculate a vector of the sentence. In the following description, a vector of a sentence is referred to as a "sentence vector". The aggregation unit 151 calculates a sentence vector for another sentence in a similar manner.

The aggregation unit 151 calculates a vector of a single text by accumulating the sentence vectors of the plurality of sentences included in the single text. In the following description, a vector of a text is referred to as a "text vector". By executing the processing described above on other texts, the aggregation unit 151 specifies a relationship between a text vector of a text and a sentence vector of a sentence included in the text for each text included in the teacher data 142.

Subsequently, an example of the processing in which the aggregation unit 151 generates the aggregated data 143 will be described. The aggregation unit 151 associates the text vector of the text and the sentence vector of the sentence included in the text that are calculated in the processing described above and registers the associated vectors in the aggregated data 143. It can be said that a plurality of sentence vectors associated with a single text vector is sentence vectors that easily co-occur.

The aggregation unit 151 scans each text vector in the aggregated data 143, and in a case where similar text vectors exist, the aggregation unit 151 may integrate the similar text vectors into a single text vector. For example, the aggregation unit 151 specifies vectors of which a distance between text vectors is less than a predetermined distance as the similar text vectors. In a case where the similar text vectors are integrated into a single vector, the aggregation unit 151 may make the integrated text vector match any one of the text vectors or may set an average value of the text vectors as the integrated text vector.

In a case of integrating two text vectors, the aggregation unit 151 also integrates sentence vectors associated with the text vectors. Regarding the sentence vectors to be integrated, the aggregation unit 151 may integrate similar sentence vectors into a single vector.

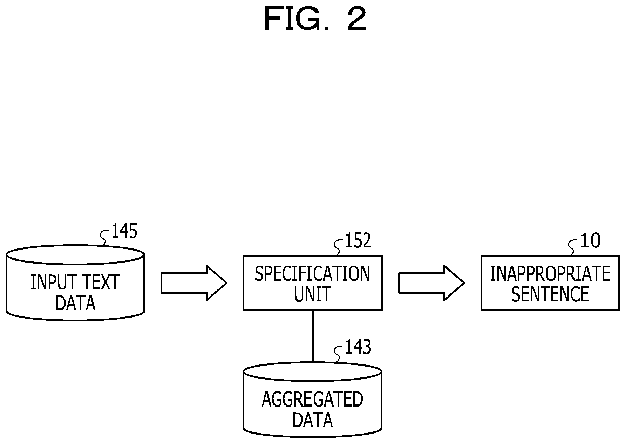

The description proceeds to FIG. 2. Upon receiving input text data 145, a specification unit 152 of the information processing device specifies an inappropriate sentence 10 from a text included in the input text data 145 on the basis of the aggregated data 143. Here, for convenience of the description, a case will be described where the input text data 145 includes a single text. However, the input text data 145 may include a plurality of texts. Hereinafter, an example of processing of the specification unit 152 will be described. The text included in the input text data 145 corresponds to a "second text". A sentence included in the second text corresponds to a "second sentence".

The specification unit 152 calculates a text vector and each sentence vector in the text included in the input text data 145. Processing for calculating the text vector and the sentence vector is similar to the processing in which the aggregation unit 151 calculates the text vector and the sentence vector.

In the following description, a text vector included in the aggregated data 143 is referred to as a "first text vector". A sentence vector included in the aggregated data 143 is referred to as a "first sentence vector". A text vector corresponding to the text of the input text data 145 is referred to as a "second text vector". A sentence vector corresponding to the sentence of the input text data 145 is referred to as a "second sentence vector".

The specification unit 152 specifies the first text vector having the shortest distance to the second text vector on the basis of the second text vector and each first text vector of the aggregated data 143. In the following description, the first text vector having the shortest distance to the second text vector is referred to as a "specific text vector". The specification unit 152 extracts a plurality of first sentence vectors corresponding to the specific text vector. The specification unit 152 calculates each of distances between the plurality of extracted first sentence vectors and the plurality of second sentence vectors.

The specification unit 152 executes the processing for specifying the shortest distance from among the distances between the second sentence vector and the plurality of first sentence vectors for each second sentence vector. The specification unit 152 specifies a second sentence vector of which the shortest distance is equal to or more than a threshold from among the second sentence vectors. The specification unit 152 specifies a sentence corresponding to the specified second sentence vector as the inappropriate sentence 10. It can be said that the second sentence vector corresponding to the inappropriate sentence 10 is a sentence vector having a different tendency as compared with the plurality of first sentence vectors included in the specific text vector.

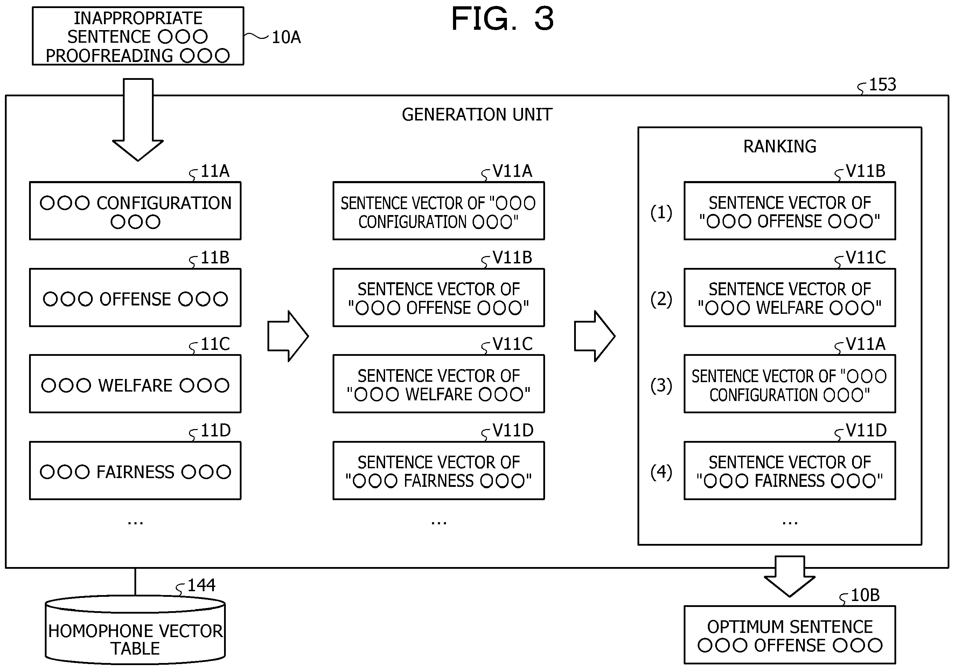

The description proceeds to FIG. 3. A generation unit 153 of the information processing device generates an optimum sentence 10B on the basis of an inappropriate sentence 10A by executing processing illustrated in FIG. 3. Here, as an example, description will be made as assuming content of the inappropriate sentence 10A as "000 proofreading 000". The mark "0" corresponds to a word included in the sentence 10A.

The generation unit 153 divides the inappropriate sentence 10A into a plurality of words by performing morphological analysis on the inappropriate sentence 10A. The generation unit 153 compares the plurality of divided words with a homophone vector table 144 and extracts a homophone included in the inappropriate sentence 10A. The homophone vector table 144 is a table that defines a group of homophones and holds a word vector of each homophone. Here, the description will be made while assuming that the homophone included in the inappropriate sentence 10A is "proofreading (kousei)".

The generation unit 153 generates a plurality of third sentences 11A, 11B, 11C, and 11D by converting the homophone included in the inappropriate sentence 10A into another homophone included in the same group. For example, "proofreading (kousei)" is included in a group of "configuration (kousei)", "offense (kousei)", "welfare (kousei)", and "fairness (kousei)". The third sentence 11A is a sentence in which "proofreading (kousei)" in the inappropriate sentence 10A is converted into "configuration (kousei)". The third sentence 11B is a sentence in which "proofreading (kousei)" in the inappropriate sentence 10A is converted into "offense (kousei)". The third sentence 11C is a sentence in which "proofreading (kousei)" in the inappropriate sentence 10A is converted into "welfare (kousei)". The third sentence 11D is a sentence in which "proofreading (kousei)" in the inappropriate sentence 10A is converted into "fairness (kousei)".

The generation unit 153 calculates respective sentence vectors of the third sentences 11A to 11D. Processing in which the generation unit 153 calculates the sentence vectors is similar to the processing in which the aggregation unit 151 calculates the sentence vector. The sentence vector of the third sentence 11A is referred to as a sentence vector V11A. The sentence vector of the third sentence 11B is referred to as a sentence vector V11B. The sentence vector of the third sentence 11C is referred to as a sentence vector V11C. The sentence vector of the third sentence 11D is referred to as a sentence vector V11D.

The generation unit 153 compares distances between the sentence vectors V11A to V11D with the plurality of first sentence vectors corresponding to the specific text vector and calculates the shortest distance of each of the sentence vectors V11A to V11D.

The shortest distance of the sentence vector V11A indicates the shortest distance from among the distances between the sentence vector V11A and the plurality of first sentence vectors corresponding to the specific text vector. The shortest distance of the sentence vector V11B indicates the shortest distance from among the distances between the sentence vector V11B and the plurality of first sentence vectors corresponding to the specific text vector.

The shortest distance of the sentence vector V11C indicates the shortest distance from among the distances between the sentence vector V11C and the plurality of first sentence vectors corresponding to the specific text vector. The shortest distance of the sentence vector V11D indicates the shortest distance from among the distances between the sentence vector V11D and the plurality of first sentence vectors corresponding to the specific text vector. It can be said that the smaller the shortest distance is, the higher the possibility that the sentence is a more optimum sentence.

The generation unit 153 generates a ranking in which a vector with the smaller shortest distance is ranked higher. In the example illustrated in FIG. 3, when the sentence vectors V11A to V11D are arranged in an ascending order of the shortest distance, the sentence vectors V11B, V11C, V11A, and V11D are arranged in this order.

The generation unit 153 generates the optimum sentence 10B on the basis of a ranking result. For example, the generation unit 153 generates the sentence with the sentence vector V11B having the smallest shortest distance as the optimum sentence 10B.

As described above, the information processing device according to the first embodiment detects an inappropriate sentence from the relationship between the sentence vectors of the text aggregated on the basis of the teacher data 142 and the relationship between the sentence vectors of the input text and converts a homophone in the detected sentence into another homophone. Then, the information processing device specifies an optimum sentence from among the plurality of third sentences in which the homophone is converted into another homophone. This makes it possible to proofread the inappropriate sentence included in the input text. Furthermore, it is possible to proofread to a text in which the sentence vector appropriately transitions.

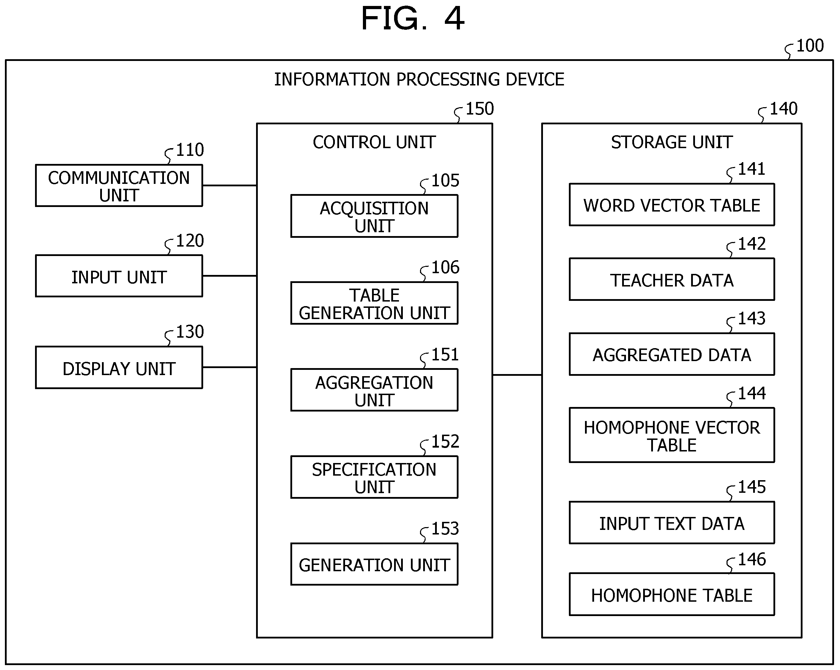

Next, a configuration of the information processing device according to the first embodiment will be described. FIG. 4 is a functional block diagram illustrating the configuration of the information processing device according to the first embodiment. As illustrated in FIG. 4, this information processing device 100 includes a communication unit 110, an input unit 120, a display unit 130, a storage unit 140, and a control unit 150.

The communication unit 110 is a processing unit that executes information communication with an external device (not illustrated) via a network. The communication unit 110 corresponds to a communication device such as a network interface card (NIC). For example, the control unit 150 to be described below exchanges information with an external device via the communication unit 110.

The input unit 120 is an input device that inputs various types of information to the information processing device 100. The input unit 120 corresponds to a keyboard, a mouse, a touch panel, or the like.

The display unit 130 is a display device that displays information output from the control unit 150. The display unit 130 corresponds to a liquid crystal display, an organic electro luminescence (EL) display, a touch panel, or the like.

The storage unit 140 includes the word vector table 141, the teacher data 142, the aggregated data 143, the homophone vector table 144, the input text data 145, and a homophone table 146. The storage unit 140 corresponds to a semiconductor memory element such as a random access memory (RAM) or a flash memory (flash memory), or a storage device such as a hard disk drive (HDD).

The word vector table 141 is a table that associates a word with a word vector.

The teacher data 142 is data that stores a plurality of appropriate texts. The text in the teacher data 142 may be any text as long as the text is an appropriate text. It is assumed that the text in the teacher data 142 include an appropriate sentence. For example, the teacher data 142 may be a text described in the Wikipedia, Aozora bunko, or the like.

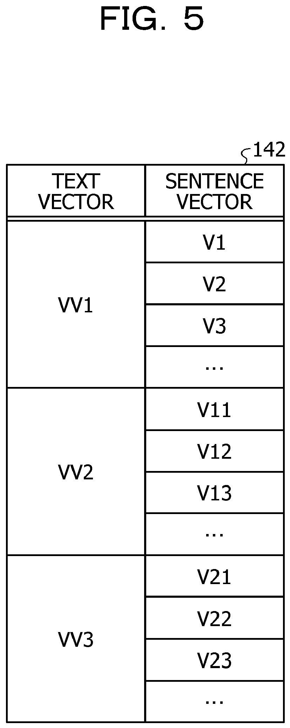

The aggregated data 143 is data that stores a text vector calculated on the basis of the teacher data 142 and a sentence vector. FIG. 5 is a diagram illustrating an example of a data structure of aggregated data. As illustrated in FIG. 5, this aggregated data 143 associates a text vector with a sentence vector. Each text vector is a text vector corresponding to each text included in the teacher data 142. The sentence vector is a sentence vector of a sentence configuring the text corresponding to the text vector.

For example, sentence vectors corresponding to a text vector W1 are sentence vectors V1, V2, and V3. A text corresponding to the text vector W1 includes sentences corresponding to the sentence vectors V1 to V3, and it can be said that the sentence vectors V1 to V3 are sentence vectors having a co-occurrence relationship.

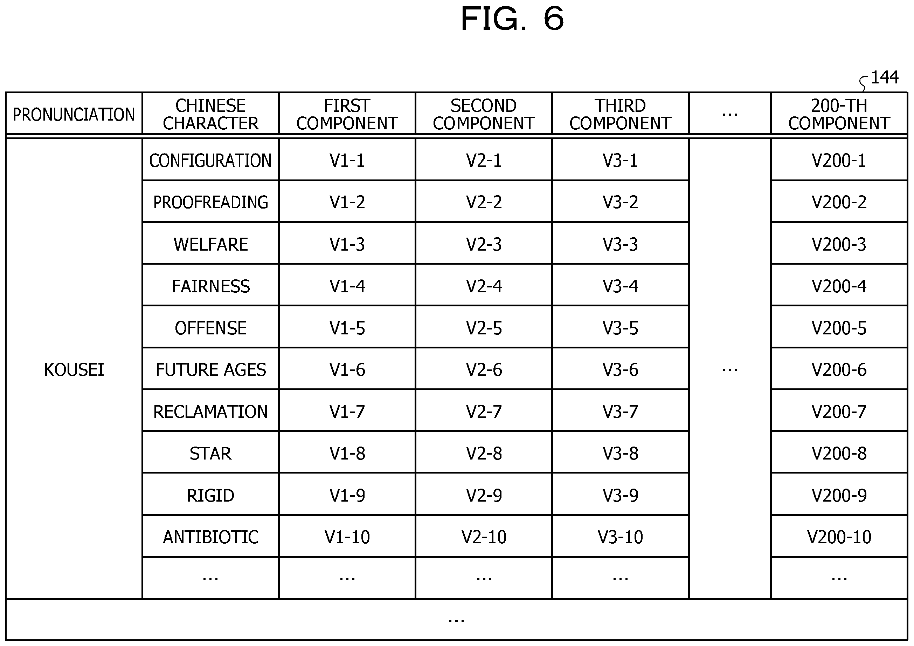

The homophone vector table 144 is a table that defines a group of homophones and has a word vector of each homophone. FIG. 6 is a diagram illustrating an example of a data structure of a homophone vector table. As illustrated in FIG. 6, this homophone vector table 144 associates a pronunciation, Chinese characters, and a first to 200-th components of a word vector. Chinese characters having the same pronunciation and different characters are homophones, and a plurality of Chinese characters corresponding to the same pronunciation belongs to the same group. For example, each of Chinese characters "configuration (kousei), proofreading (kousei), welfare (kousei), fairness (kousei), offense (kousei), future ages (kousei), reclamation (kousei), star (kousei), rigid (kousei), and antibiotic (kousei)" corresponding to a pronunciation "kousei" belongs to the same group.

The input text data 145 is data of a text including a plurality of sentences. In a case where an inappropriate sentence is included in the sentence in the input text data, an optimum sentence is generated through processing to be described later.

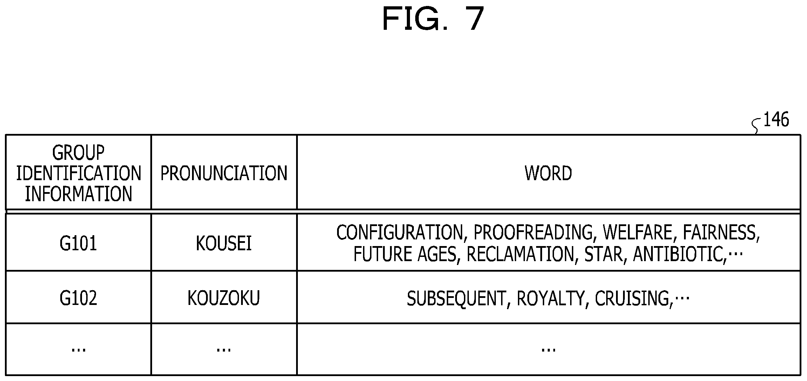

The homophone table 146 is a table that defines a group of the same homophones. FIG. 7 is a diagram illustrating an example of a data structure of a homophone table. As illustrated in FIG. 7, the homophone table 146 associates group identification information, a pronunciation, and a word. The group identification information is information that uniquely identifies a group of words included in a homophone. The pronunciation indicates a pronunciation of the homophone. The word indicates each word (homophone) having the same pronunciation. For example, each of the words "configuration (kousei), proofreading (kousei), welfare (kousei), fairness (kousei), offense (kousei), future ages (kousei), reclamation (kousei), star (kousei), rigid (kousei), antibiotic (kousei), or the like" having the pronunciation "kousei" is a homophone that belongs to the same group.

The description returns to FIG. 4. The control unit 150 includes an acquisition unit 105, a table generation unit 106, the aggregation unit 151, the specification unit 152, and the generation unit 153. The control unit 150 may be implemented by a central processing unit (CPU), a micro processing unit (MPU), or the like. Furthermore, the control unit 150 may be implemented by hard wired logic such as an application specific integrated circuit (ASIC) or a field programmable gate array (FPGA).

The acquisition unit 105 is a processing unit that acquires various types of data. For example, the acquisition unit 105 acquires the word vector table 141, the teacher data 142, the input text data 145, the homophone table 146, or the like via a network. The acquisition unit 105 stores the word vector table 141, the teacher data 142, the input text data 145, the homophone table 146, or the like in the storage unit 140.

The table generation unit 106 is a processing unit that generates the homophone vector table 144 on the basis of the word vector table 141 and the homophone table 146. The table generation unit 106 stores the generated homophone vector table 144 in the storage unit 140. For example, the table generation unit 106 specifies each word corresponding to the same group identification information in the homophone table 146 and extracts each word vector corresponding to the specified word from the word vector table 141. The table generation unit 106 associates the word corresponding to the same group identification information with the word vector and registers the word and the word vector in the homophone vector table 144. The table generation unit 106 associates each word corresponding to the same group identification information using a pronunciation. The table generation unit 106 generates the homophone vector table 144 by repeatedly executing the processing described above for each word corresponding to each piece of the group identification information.

The aggregation unit 151 is a processing unit that generates the aggregated data 143 on the basis of the word vector table 141 and the teacher data 142. The processing of the aggregation unit 151 corresponds to the processing described with reference to FIG. 1. The aggregation unit 151 stores the generated aggregated data 143 in the storage unit 140.

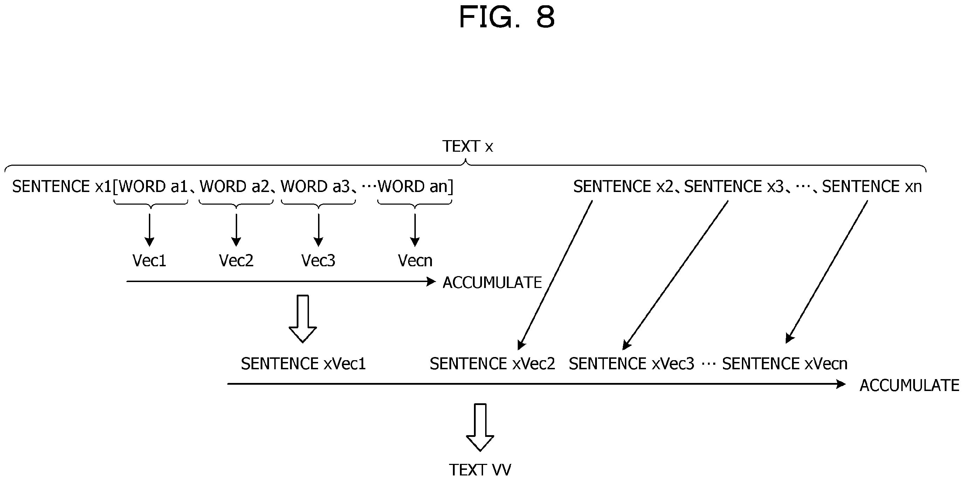

The aggregation unit 151 executes processing for calculating a text vector and processing for generating aggregated data. FIG. 8 is a diagram for explaining the processing for calculating a text vector. Here, a case will be described where a text vector of a text x is calculated. It is assumed that the text x include a sentence x1, a sentence x2, a sentence x3,..., and a sentence xn. It is assumed that the sentence x1 include a word a1, a word a2, a word a3,..., and a word an.

The aggregation unit 151 compares the words a1 to an with the word vector table 141 and specifies word vectors Vec1, Vec2, Vec3,..., and Vecn of the respective words a1 to an. The aggregation unit 151 calculates a sentence vector xVec1 of the sentence x1 by accumulating each of the word vectors Vec1 to Vecn.

The aggregation unit 151 similarly calculates sentence vectors xVec2, xVec3,..., and xVecn for the sentence x2, the sentence x3,..., and the sentence xn. The aggregation unit 151 calculates a text vector W by accumulating each of the sentence vectors xVec1 to xVecn.

For other texts included in the teacher data 142, the aggregation unit 151 calculates a text vector and a plurality of sentence vectors by executing the processing described above.

Subsequently, an example of the processing in which the aggregation unit 151 generates the aggregated data 143 will be described. Each time when the text vector is calculated through the processing described above, the aggregation unit 151 associates the text vector of the text and the sentence vector of the sentence included in the text and registers the vectors in the aggregated data 143. It can be said that a plurality of sentence vectors associated with a single text vector is sentence vectors that easily co-occur.

The aggregation unit 151 scans each text vector in the aggregated data 143, and in a case where similar text vectors exist, the aggregation unit 151 may integrate the similar text vectors into a single text vector. The aggregation unit 151 specifies vectors of which a distance between text vectors is less than a predetermined distance as the similar text vectors. In a case where the similar text vectors are integrated into a single vector, the aggregation unit 151 may make the integrated text vector match any one of the text vectors or may set an average value of the text vectors as the integrated text vector.

For example, in FIG. 5, in a case where the text vector VV1 is similar to a text vector W2, the aggregation unit 151 generates a text vector W1' by integrating the text vectors W1 and VV2. For example, the text vector W1' corresponds to an average value of the text vectors W1 and W2.

Furthermore, in a case of generating the text vector W1', the aggregation unit 151 integrates the sentence vectors V1 to V3 and sentence vectors V11 to V13. For example, the aggregation unit 151 generates a sentence vector V1' by integrating the sentence vector V1 and the sentence vector V11. The aggregation unit 151 generates a sentence vector V2' by integrating the sentence vector V2 and the sentence vector V12. The aggregation unit 151 generates a sentence vector V3' by integrating the sentence vector V3 and the sentence vector V13. However, it is assumed that the sentence vectors V1 and V11 be similar, the sentence vectors V2 and V12 be similar, and the sentence vectors V3 and V13 be similar.

The aggregation unit 151 generates the aggregated data 143 by executing the processing described above.

The description returns to FIG. 4. The specification unit 152 is a processing unit that specifies an inappropriate sentence 10 from the text included in the input text data 145 on the basis of the aggregated data 143 when the input text data 145 is stored in the storage unit 140.

The specification unit 152 calculates a text vector (first text vector) and each sentence vector (first sentence vector) for the text included in the input text data 145. Processing for calculating the text vector and the sentence vector is similar to the processing in which the aggregation unit 151 calculates the text vector and the sentence vector.

The specification unit 152 specifies the first text vector (specific text vector) having the shortest distance to the second text vector on the basis of the second text vector and each first text vector of the aggregated data 143. The specification unit 152 extracts a plurality of first sentence vectors corresponding to the specific text vector. The specification unit 152 calculates each of distances between the plurality of extracted first sentence vectors and the plurality of second sentence vectors.

The specification unit 152 executes the processing for specifying the shortest distance from among the distances between the second sentence vector and the plurality of first sentence vectors for each second sentence vector. The specification unit 152 specifies a second sentence vector of which the shortest distance is equal to or more than a threshold from among the second sentence vectors. The specification unit 152 specifies a sentence corresponding to the specified second sentence vector as the inappropriate sentence 10. The specification unit 152 outputs the specified inappropriate sentence 10A to the generation unit 153.

The generation unit 153 is a processing unit that generates the optimum sentence 10B on the basis of the inappropriate sentence 10A. Processing of the generation unit 153 corresponds to the processing described with reference to FIG. 3. Here, as an example, description will be made as assuming content of the inappropriate sentence 10A as "000 proofreading 000".

The generation unit 153 divides the inappropriate sentence 10A into a plurality of words by performing morphological analysis on the inappropriate sentence 10A. The generation unit 153 compares the plurality of divided words with a homophone vector table 144 and extracts a homophone included in the inappropriate sentence 10A. Here, the description will be made while assuming that the homophone included in the inappropriate sentence 10A is "proofreading (kousei)".

The generation unit 153 generates a plurality of third sentences 11A, 11B, 11C, and 11D by converting the homophone included in the inappropriate sentence 10A into another homophone included in the same group. For example, "proofreading (kousei)" is included in a group of "configuration (kousei)", "offense (kousei)", "welfare (kousei)", and "fairness (kousei)". The third sentence 11A is a sentence in which "proofreading (kousei)" in the inappropriate sentence 10A is converted into "configuration (kousei)". The third sentence 11B is a sentence in which "proofreading (kousei)" in the inappropriate sentence 10A is converted into "offense (kousei)". The third sentence 11C is a sentence in which "proofreading (kousei)" in the inappropriate sentence 10A is converted into "welfare (kousei)". The third sentence 11D is a sentence in which "proofreading (kousei)" in the inappropriate sentence 10A is converted into "fairness (kousei)".

The generation unit 153 calculates respective sentence vectors of the third sentences 11A to 11D. Processing in which the generation unit 153 calculates the sentence vectors is similar to the processing in which the aggregation unit 151 calculates the sentence vector. The sentence vector of the third sentence 11A is referred to as a sentence vector V11A. The sentence vector of the third sentence 11B is referred to as a sentence vector V11B. The sentence vector of the third sentence 11C is referred to as a sentence vector V11C. The sentence vector of the third sentence 11D is referred to as a sentence vector V11D.

The generation unit 153 compares distances between the sentence vectors V11A to V11D with the plurality of first sentence vectors corresponding to the specific text vector and calculates the shortest distance of each of the sentence vectors V11A to V11D.

The shortest distance of the sentence vector V11A indicates the shortest distance from among the distances between the sentence vector V11A and the plurality of first sentence vectors corresponding to the specific text vector. The shortest distance of the sentence vector V11B indicates the shortest distance from among the distances between the sentence vector V11B and the plurality of first sentence vectors corresponding to the specific text vector.

The shortest distance of the sentence vector V11C indicates the shortest distance from among the distances between the sentence vector V11C and the plurality of first sentence vectors corresponding to the specific text vector. The shortest distance of the sentence vector V11D indicates the shortest distance from among the distances between the sentence vector V11D and the plurality of first sentence vectors corresponding to the specific text vector.

The generation unit 153 generates a ranking in which a vector with the smaller shortest distance is ranked higher. In the example illustrated in FIG. 3, when the sentence vectors V11A to V11D are arranged in an ascending order of the shortest distance, the sentence vectors V11B, V11C, V11A, and V11D are arranged in this order.

The generation unit 153 generates the optimum sentence 10B on the basis of a ranking result. For example, the generation unit 153 generates the sentence with the sentence vector V11B having the smallest shortest distance as the optimum sentence 10B.

Note that the generation unit 153 generates screen information in which the inappropriate sentence 10A is associated with the third sentences 11A to 11D, displays the screen information on the display unit 130, and may make a user select any one of the third sentences 11A to 11D. The user operates the input unit 120 and selects any one of the third sentences 11A to 11D. In this case, the generation unit 153 generates the selected third sentence as the optimum sentence 10B.

The generation unit 153 may update the input text data 145 by replacing the inappropriate sentence 10A included in the input text data 145 with the optimum sentence 10B.

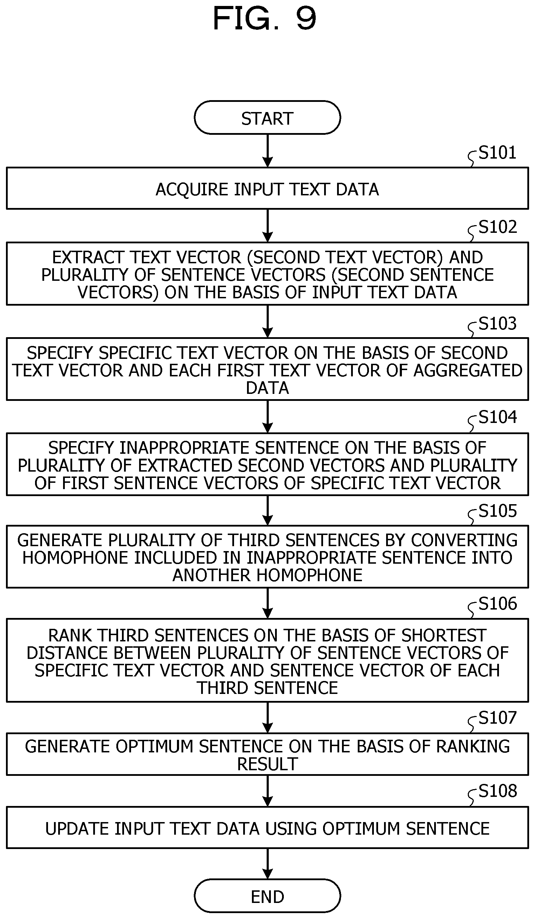

Next, an example of a processing procedure of the information processing device 100 according to the first embodiment will be described. FIG. 9 is a flowchart illustrating a processing procedure of the information processing device according to the first embodiment. As illustrated in FIG. 9, the acquisition unit 105 of the information processing device 100 acquires the input text data 145 (step S101).

The specification unit 152 of the information processing device 100 extracts a text vector (second text vector) and sentence vectors (second sentence vector) on the basis of the input text data 145 (step S102). The specification unit 152 specifies a specific text vector on the basis of the second text vector and each first text vector of the aggregated data 143 (step S103).

The specification unit 152 specifies an inappropriate sentence on the basis of the plurality of extracted second sentence vectors and the plurality of first sentence vectors of the specific text vector (step S104).

The generation unit 153 of the information processing device 100 generates a plurality of third sentences by converting a homophone included in the inappropriate sentence into another homophone (step S105). The generation unit 153 ranks the third sentences on the basis of a shortest distance between the plurality of sentence vectors of the specific text vector and a sentence vector of each third sentence (step S106). The generation unit 153 generates an optimum sentence on the basis of a ranking result (step S107). The generation unit 153 updates the input text data 145 using the optimum sentence (step S108).

Next, effects of the information processing device 100 according to the first embodiment will be described. The information processing device 100 specifies a second sentence (inappropriate sentence) having a different tendency from a plurality of first sentences on the basis of the plurality of second sentence vectors and the plurality of first sentence vectors. The information processing device 100 extracts a word that matches the homophone from words included in the specified second sentence and converts the extracted word into a word associated with the homophone so as to generate a second sentence that has the same tendency as the plurality of first sentences. As a result, it is possible to proofread to a sentence with a correct sentence vector.

In a case where the word included in the second sentence (inappropriate sentence) has a plurality of homophones, the information processing device 100 generates a plurality of third sentences on the basis of the plurality of homophones. As a result, it is possible to create a candidate of the sentence with the correct sentence vector.

The information processing device 100 selects any one of the third sentences as the second sentence having the same tendency as the plurality of first sentences on the basis of the sentence vectors of the plurality of third sentences and the first sentence vectors of the plurality of first sentences. As a result, a correct sentence can be automatically selected from among the candidates of the sentence with the correct sentence vector.

By the way, in a case where the word included in the second sentence (inappropriate sentence) includes a homophone, the information processing device 100 according to the first embodiment has generated the plurality of third sentences on the basis of the plurality of homophones. However, the embodiment is not limited to this. For example, in a case where the words included in the second sentence include a conjunction, the information processing device 100 may generate a plurality of third sentences on the basis of another conjunction and create a candidate of a sentence with a correct sentence vector.

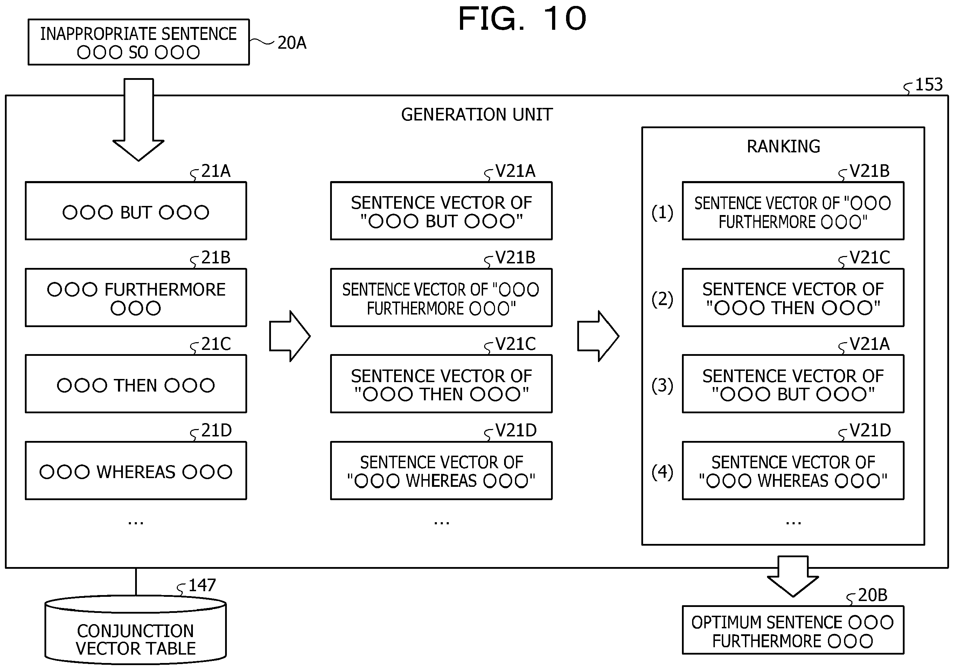

FIG. 10 is a diagram for explaining an example of other processing of the information processing device. As an example, in FIG. 10, description will be made as assuming that content of the inappropriate sentence 20A is "000, so 000". The mark "0" corresponds to a word included in the sentence 20A.

The generation unit 153 divides the inappropriate sentence 20A into a plurality of words by performing morphological analysis on the inappropriate sentence 20A. The generation unit 153 compares the plurality of divided words with a conjunction vector table 147 and extracts a conjunction included in the inappropriate sentence 20A. The conjunction vector table 147 is a table that holds a word vector of each conjunction. Here, description will be made as setting the conjunction included in the inappropriate sentence 20A as °so (dakara)".

The conjunction is a word that indicates a relationship between a preceding phrase, a following phrase to a sentence, and a sentence. For example, types of the conjunctions included in the conjunction vector table 147 include conjunctive, adversative, parataxis, addition, contrastive, alternative, description, supplemental, paraphrase, illustrative, attention, conversion, or the like.

Conjunctions of the type "conjunctive" include "so, accordingly, therefore", or the like. Conjunctions of the type "adversative" include "but, however", or the like. Conjunctions of the type "parataxis" include "furthermore, and" or the like. Conjunctions of the type "addition" include "then, and" or the like. Conjunctions of the type "contrastive" include "whereas, on the other hand", or the like. Conjunctions of the type "alternative" include "or, alternatively", or the like. Conjunctions of the type "description" include "because, that is", or the like. Conjunctions of the type "supplemental" include "note that, but", or the like. Conjunctions of the type "paraphrase" include "that is, in other words", or the like. Conjunctions of the type "illustrative" include "for example, so to speak", or the like. Conjunctions of the type "attention" include "especially, particularly", or the like. Conjunctions of the type "conversion" include "then, now", or the like.

The generation unit 153 generates a plurality of third sentences 21A, 21B, 21C, and 21D by converting the conjunction included in the inappropriate sentence 20A into another type of conjunction. For example, the third sentence 21A is a sentence in which "so" in the inappropriate sentence 20A is converted into "but". The third sentence 21B is a sentence in which "so" in the inappropriate sentence 20A is converted into "furthermore". The third sentence 21C is a sentence in which "so" in the inappropriate sentence 20A is converted into "then". The third sentence 21D is a sentence in which "so" in the inappropriate sentence 20A is converted into "but".

The generation unit 153 calculates respective sentence vectors of the third sentences 21A to 21D. Processing in which the generation unit 153 calculates the sentence vectors is similar to the processing in which the aggregation unit 151 calculates the sentence vector. The sentence vector of the third sentence 21A is referred to as a sentence vector V21A. The sentence vector of the third sentence 21B is referred to as a sentence vector V21B. The sentence vector of the third sentence 21C is referred to as a sentence vector V21C. The sentence vector of the third sentence 21D is referred to as a sentence vector V21D.

The generation unit 153 compares distances between the sentence vectors V21A to V21D with the plurality of first sentence vectors corresponding to the specific text vector and calculates the shortest distance of each of the sentence vectors V21A to V21D.

The generation unit 153 generates a ranking in which a vector with the smaller shortest distance is ranked higher. In the example illustrated in FIG. 10, when the sentence vectors V21A to V21D are arranged in an ascending order of the shortest distance, the sentence vectors V21B, V21C, V21A, and V21D are arranged in this order.

The generation unit 153 generates an optimum sentence 20B on the basis of a ranking result. For example, the generation unit 153 generates the sentence with the sentence vector V21B having the smallest shortest distance as the optimum sentence 20B.

As described with reference to FIG. 10, the generation unit 153 of the information processing device 100 generates the plurality of third sentences by converting the conjunction in the inappropriate sentence into another type of conjunction and specifies an optimum sentence. This makes it possible to convert a sentence including an inappropriate conjunction into a sentence in which the inappropriate conjunction is replaced with an optimum conjunction.

Note that the information processing device 100 according to the first embodiment may combine the processing described with reference to FIG. 3 and the processing described with reference to FIG. 10 and proofread the inappropriate sentence included in the input text. In other words, the generation unit 153 of the information processing device 100 may generate the plurality of third sentences in which the homophone included in the inappropriate sentence is converted into another homophone and the conjunction included in the inappropriate sentence is converted into another type of conjunction and specify an optimum sentence from among the plurality of generated third sentences.

### [Second Embodiment]

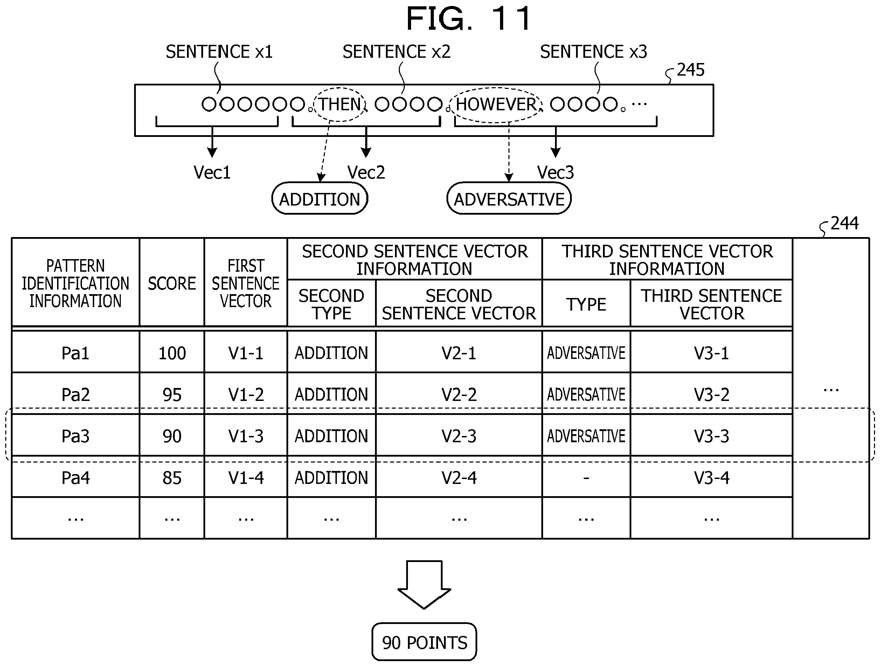

Next, an example of processing of an information processing device according to a second embodiment will be described. FIG. 11 is a diagram for explaining an example of the processing of the information processing device according to the second embodiment. The information processing device is a device that scores input text data 245 corresponding to a paper of an essay.

The information processing device extracts a plurality of sentences on the basis of the input text data 245 and calculates a sentence vector of each sentence. Furthermore, a type of a conjunction included in each sentence is specified. As in the first embodiment, it is assumed that sentences included in a text be delimited by punctuations.

For example, it is assumed that the input text data 245 included in FIG. 11 include a sentence x1, a sentence x2, and a sentence x3. The information processing device calculates respective sentence vectors of the sentences x1, x2, and x3. The sentence vector of the sentence x1 is assumed as "Vec1", the sentence vector of the sentence x2 is assumed as "Vec2", and the sentence vector of the sentence x3 is assumed as "Vec3". Furthermore, a conjunction "then" is included in the sentence x2, and a type of the conjunction is assumed as "addition". The sentence x3 includes a conjunction "however", and a type of the conjunction is assumed as "adversative".

The information processing device compares the sentence vector extracted from the input text data 245 and the type of the conjunction with a transition table 244 and specifies a score of the input text data 245. The transition table 244 is a table that defines a score and transitions of a conjunction and a sentence vector included in a model answer corresponding to the score. The score corresponds to "score".

For example, the transition table 244 associates pattern identification information, a score, a first sentence vector, second sentence vector information, and third sentence vector information. Although not illustrated, the transition table 244 may include n-th sentence vector information.

The pattern identification information is information that uniquely identifies a pattern of a type of a conjunction related to a text to be a model answer and a transition of a sentence vector. The score indicates a score that is a text scoring result. The first sentence vector corresponds to a sentence vector of a first (head) sentence of the text. The second sentence vector information includes a second type and a second sentence vector. The second type indicates a type of a conjunction included in a second sentence of the text. The second sentence vector corresponds to a sentence vector of the second sentence of the text. The third sentence vector information includes a third type and a third sentence vector. The third type indicates a type of a conjunction included in a third sentence of the text. The third sentence vector corresponds to a sentence vector of the third sentence of the text.

For example, the information processing device compares each of first sentence vectors V1-n in the transition table 244 with the vector Vec1 and specifies the most similar first sentence vector. Here, the first sentence vector that is the most similar to the vector Vec1 is assumed as a first sentence vector V1-3.

The information processing device compares each of second sentence vectors V2-n in the transition table 244 with the vector Vec2 and specifies the most similar second sentence vector. Here, the second sentence vector that is the most similar to vector Vec2 is assumed as a second sentence vector V2-3. Furthermore, the second type corresponds to the type "addition" of the conjunction of the sentence x2.

The information processing device compares each of third sentence vectors V3-n in the transition table 244 with the vector Vec3 and specifies the most similar third sentence vector. Here, the third sentence vector that is the most similar to vector Vec3 is assumed as a third sentence vector V3-3. Furthermore, the third type corresponds to the type "adversative" of the conjunction of the sentence x3.

By executing the processing described above, the information processing device determines that the type of the conjunction included in the input text data 245 and the transition of the sentence vector correspond to pattern identification information "Pa3" in the transition table 244. Because a score corresponding to the pattern identification information "Pa3" is "90", the information processing device outputs the score of the input text data 245 as "90 points".

As described above, the information processing device according to the second embodiment compares the sentence vector and the type of the conjunction extracted from the input text data 245 with the transition table 244 and specifies the score of the input text data 245. As a result, a paper of an essay or the like can be automatically scored on the basis of the transition of the sentence vector.

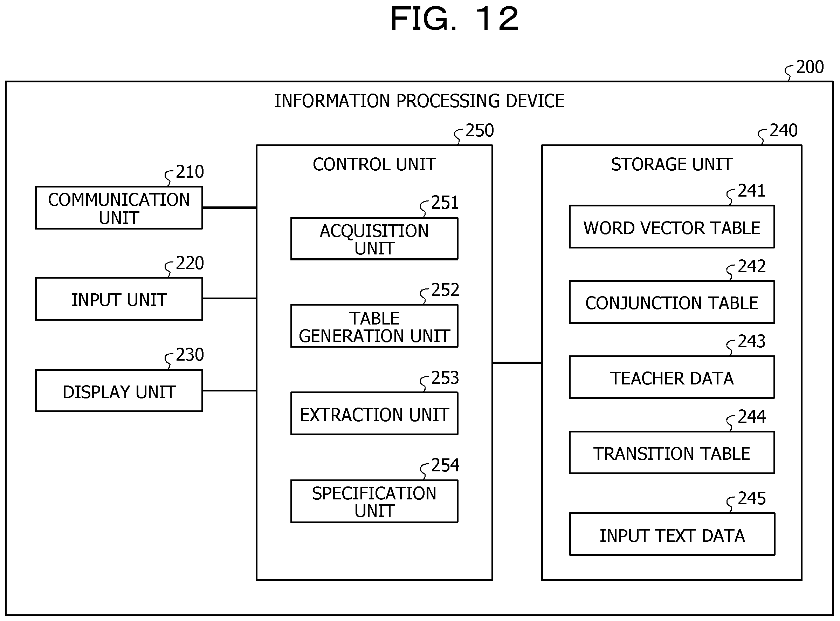

Next, a configuration of the information processing device according to the second embodiment will be described. FIG. 12 is a functional block diagram illustrating the configuration of the information processing device according to the second embodiment. As illustrated in FIG. 12, this information processing device 200 includes a communication unit 210, an input unit 220, a display unit 230, a storage unit 240, and a control unit 250.

The communication unit 210 is a processing unit that executes information communication with an external device (not illustrated) via a network. The communication unit 210 corresponds to a communication device such as an NIC. For example, the control unit 250 to be described below exchanges information with an external device via the communication unit 210.

The input unit 220 is an input device that inputs various types of information to the information processing device 200. The input unit 220 corresponds to a keyboard, a mouse, a touch panel, or the like. A user may input the input text data 245 by operating the input unit 220.

The display unit 230 is a display device that displays information output from the control unit 250. The display unit 230 corresponds to a liquid crystal display, an organic EL display, a touch panel, or the like.

The storage unit 240 includes a word vector table 241, a conjunction table 242, teacher data 243, the transition table 244, and the input text data 245. The storage unit 240 corresponds to a semiconductor memory element such as a RAM or a flash memory, or a storage device such as an HDD.

The word vector table 241 is a table that associates a word with a word vector. It is assumed that the word vector table 241 also include a word vector corresponding to a conjunction.

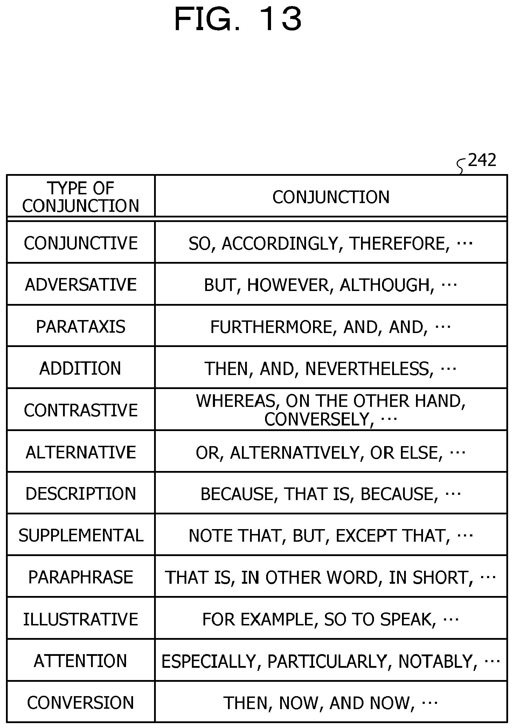

The conjunction table 242 is a table that associates a type of a conjunction and a conjunction. FIG. 13 is a diagram illustrating an example of a data structure of a conjunction table. As illustrated in FIG. 13, the conjunction table 242 associates a type of a conjunction and a conjunction.

Types of the conjunctions include conjunctive, adversative, parataxis, addition, contrastive, alternative, description, supplemental, paraphrase, illustrative, attention, conversion, or the like.

Conjunctions of the type "conjunctive" include "so, accordingly, therefore", or the like. Conjunctions of the type "adversative" include "but, however, although", or the like. Conjunctions of the type "parataxis" include "furthermore, and, and" or the like. Conjunctions of the type "addition" include "then, and, nevertheless" or the like. Conjunctions of the type "contrastive" include "whereas, on the other hand, conversely", or the like. Conjunctions of the type "alternative" include "or, alternatively, or else", or the like. Conjunctions of the type "description" include "because, that is, because" or the like Conjunctions of the type "supplemental" include "note that, but, except that", or the like. Conjunctions of the type "paraphrase" include "that is, in other words, in short", or the like. Conjunctions of the type "illustrative" include "for example, so to speak", or the like. Conjunctions of the type "attention" include "especially, particularly, notably", or the like. Conjunctions of the type "conversion" include "then, now, and now", or the like.

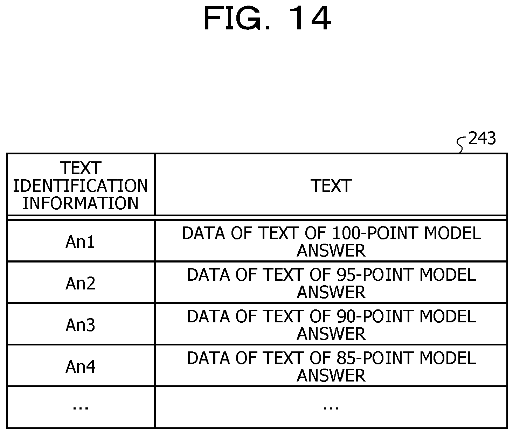

The teacher data 243 is a table that holds a model answer corresponding to each score. FIG. 14 is a diagram illustrating an example of a data structure of teacher data according to the second embodiment. As illustrated in FIG. 14, the teacher data 243 associates text identification information with a text. The text identification information is information that uniquely identifies a text to be a model answer. The text indicates data of the text of the model answer for each score. For example, a text of text identification information "An1" corresponds to data of a text of a model answer of which a scoring result is 100 points.

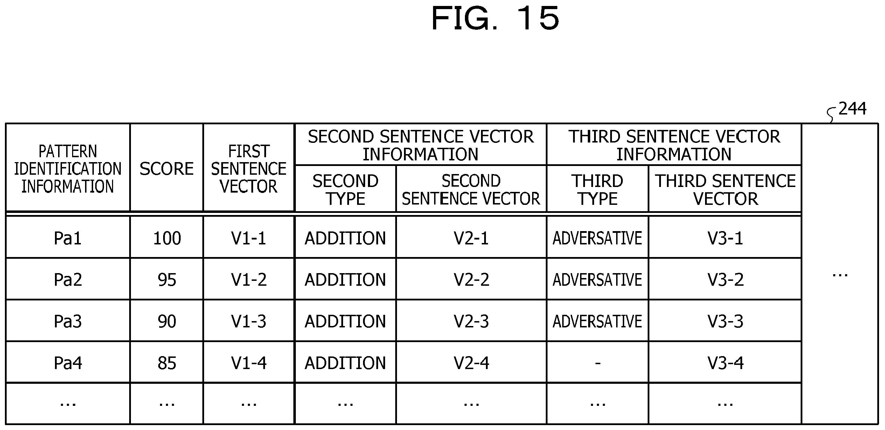

The transition table 244 is a table that defines a score and transitions of a conjunction and a sentence vector included in a model answer corresponding to the score. FIG. 15 is a diagram illustrating an example of a data structure of a transition table. As illustrated in FIG. 15, the transition table 244 associates pattern identification information, a score, a first sentence vector, second sentence vector information, and third sentence vector information. Although not illustrated, the transition table 244 may include n-th sentence vector information.

The pattern identification information is information that uniquely identifies a pattern of a type of a conjunction related to a text to be a model answer and a transition of a sentence vector. The score indicates a score that is a text scoring result. The first sentence vector corresponds to a sentence vector of a first (head) sentence of the text. The second sentence vector information includes a second type and a second sentence vector. The second type indicates a type of a conjunction included in a second sentence of the text. The second sentence vector corresponds to a sentence vector of the second sentence of the text. The third sentence vector information includes a third type and a third sentence vector. The third type indicates a type of a conjunction included in a third sentence of the text. The third sentence vector corresponds to a sentence vector of the third sentence of the text.

For example, a first sentence vector, second sentence vector information, third sentence vector information, or the like corresponding to pattern identification information "Pa1" are generated on the basis of the text identification information "An1" illustrated in FIG. 14. A first sentence vector, second sentence vector information, third sentence vector information, or the like corresponding to pattern identification information "Pa2" are generated on the basis of text identification information "An2" illustrated in FIG. 14. A first sentence vector, second sentence vector information, third sentence vector information, or the like corresponding to pattern identification information "Pa3" are generated on the basis of text identification information "An3" illustrated in FIG. 14. A first sentence vector, second sentence vector information, third sentence vector information, or the like corresponding to pattern identification information "Pa4" are generated on the basis of text identification information "An4" illustrated in FIG. 14.

The input text data 245 is data of a text including a plurality of sentences. The input text data 245 is data of a text to be scored.

The description returns to FIG. 12. The control unit 250 includes an acquisition unit 251, a table generation unit 252, an extraction unit 253, and a specification unit 254. The control unit 250 may be implemented by a CPU, an MPU, or the like. Furthermore, the control unit 250 may be implemented by hard wired logic such as an ASIC or an FPGA.

The acquisition unit 251 is a processing unit that acquires various types of data. For example, the acquisition unit 251 acquires the word vector table 241, the conjunction table 242, the teacher data 243, the input text data 245, or the like via a network. The acquisition unit 251 stores the word vector table 241, the conjunction table 242, the teacher data 243, the input text data 245, or the like in the storage unit 240.

The table generation unit 252 is a processing unit that generates the transition table 244 on the basis of the word vector table 241, the conjunction table 242, and the teacher data 243. The table generation unit 252 stores the generated transition table 244 in the storage unit 240.

Processing in which the table generation unit 252 generates the first sentence vector, the second sentence vector information, and the third sentence vector information of the pattern identification information "Pa1" will be described. The table generation unit 252 acquires a text of the text identification information "An1" from the teacher data 243, scans the acquired text, and divides the text into a plurality of sentences. An n-th sentence from the head is referred to as an n-th sentence.

The table generation unit 252 calculates a sentence vector of the first sentence and assumes the calculated sentence vector as the first sentence vector. The table generation unit 252 calculates a sentence vector of the second sentence and assumes the calculated sentence vector as the second sentence vector. The processing in which the table generation unit 252 calculates the sentence vector is similar to the processing for calculating the sentence vector described in the first embodiment. For example, the table generation unit 252 acquires the word vector of the word included in the sentence from the word vector table 241 and accumulates each word vector so as to calculate the sentence vector.

The table generation unit 252 compares a conjunction included in the second sentence with the conjunction table 242 and specifies the second type. The table generation unit 252 calculates a sentence vector of the third sentence and assumes the calculated sentence vector as the third sentence vector. The table generation unit 252 compares a conjunction included in the third sentence with the conjunction table 242 and specifies the third type. The table generation unit 252 similarly specifies a sentence vector of the n-th sentence and an n-th type.

By executing the processing described above on the text with the text identification information "An1", the table generation unit 252 calculates a first sentence vector, second sentence vector information, third sentence vector information, and n-th sentence vector information corresponding to the pattern identification information "Pa1" and the score "100".

By executing the processing described above on the text with the text identification information "An2", the table generation unit 252 calculates a first sentence vector, second sentence vector information, third sentence vector information, and n-th sentence vector information corresponding to the pattern identification information "Pa2" and the score "95".

By executing the processing described above on the text with the text identification information "An3", the table generation unit 252 calculates a first sentence vector, second sentence vector information, third sentence vector information, and n-th sentence vector information corresponding to the pattern identification information "Pa3" and the score "90".

By executing the processing described above on the text with the text identification information "An4", the table generation unit 252 calculates a first sentence vector, second sentence vector information, third sentence vector information, and n-th sentence vector information corresponding to the pattern identification information "Pa4" and the score "85". The table generation unit 252 similarly calculates a first sentence vector, second sentence vector information, third sentence vector information, and n-th sentence vector information corresponding to another piece of pattern identification information and another score.

The extraction unit 253 is a processing unit that extracts a conjunction and a sentence vector included in the input text data 245. An example of processing of the extraction unit 253 will be described with reference to FIG. 11. The extraction unit 253 scans the input text data 245 and extracts the sentence x1, the sentence x2, and the sentence x3 included in the input text data 245. The extraction unit 253 calculates sentence vectors of the sentence x1, the sentence x2, and the sentence x3 on the basis of the word vector table 241. The sentence vector of the sentence x1 is assumed as "Vec1", the sentence vector of the sentence x2 is assumed as "Vec2", and the sentence vector of the sentence x3 is assumed as "Vec3".

The extraction unit 253 compares words included in the sentence x2 with the conjunction table 242 and specifies a type of a conjunction included in the sentence x2. For example, in a case where the conjunction "then" is included in the sentence x2, the type of the conjunction is "addition".

The extraction unit 253 compares words included in the sentence x3 with the conjunction table 242 and specifies a type of a conjunction included in the sentence x3. For example, in a case where the conjunction "however" is included in the sentence x3, the type of the conjunction is "adversative".

The extraction unit 253 executes the processing described above so as to extract a transition "Vec1, Vec2, and Vec3" of the sentence vectors from the input text data 245. Furthermore, the type of the conjunction "addition" is extracted from the sentence x2 in the input text data 245, and the type of the conjunction "adversative" is extracted from the sentence x3. The extraction unit 253 outputs data of the extracted result to the specification unit 254.

The specification unit 254 is a processing unit that specifies pattern identification information corresponding to the transition of the sentence vectors and the type of the conjunction extracted from the input text data 245 on the basis of the transition of the sentence vectors and the type of the conjunction extracted from the input text data 245 and the transition table 244.

The specification unit 254 compares each of the first sentence vectors V1-n of the transition table 244 with the vector Vec1 and specifies the most similar first sentence vector. The smaller distance between the vectors means that the vectors are more similar to each other. Here, the first sentence vector that is the most similar to the vector Vec1 is assumed as a first sentence vector V1-3.

The specification unit 254 compares each of the second sentence vectors V2-n of the transition table 244 with the vector Vec2 and specifies the most similar second sentence vector. Here, the second sentence vector that is the most similar to vector Vec2 is assumed as a second sentence vector V2-3. Furthermore, the second type corresponds to the type "addition" of the conjunction of the sentence x2.

The specification unit 254 compares each of the third sentence vectors V3-n of the transition table 244 with the vector Vec3 and specifies the most similar third sentence vector. Here, the third sentence vector that is the most similar to vector Vec3 is assumed as a third sentence vector V3-3. Furthermore, the third type corresponds to the type "adversative" of the conjunction of the sentence x3.

By executing the processing described above, the specification unit 254 determines that the type of the conjunction included in the input text data 245 and the transition of the sentence vector correspond to the pattern identification information "Pa3" in the transition table 244. Because a score corresponding to the pattern identification information "Pa3" is "90", the specification unit 254 outputs the score of the input text data 245 as "90 points". The specification unit 254 may output the score to the display unit 230 and display the score on the display unit 230 or may notify an external device on the score.

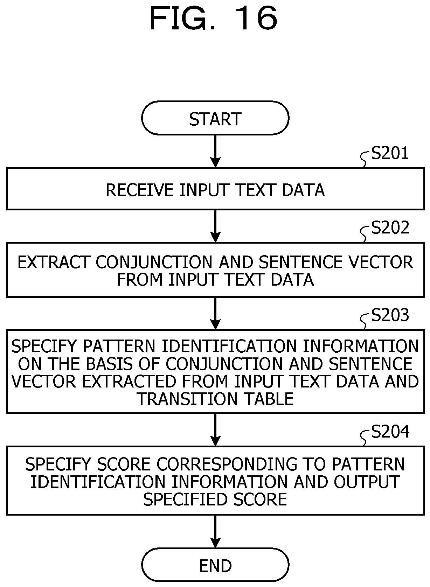

Next, an example of a processing procedure of the information processing device 200 according to the second embodiment will be described. FIG. 16 is a flowchart illustrating a processing procedure of the information processing device according to the second embodiment. As illustrated in FIG. 16, the acquisition unit 251 of the information processing device 200 acquires the input text data 245 (step S201).

The extraction unit 253 of the information processing device 200 extracts a conjunction and a sentence vector from the input text data 245 (step S202). The specification unit 254 of the information processing device 200 specifies pattern identification information on the basis of the conjunction and the sentence vector extracted from the input text data 245 and the transition table 244 (step S203).

The specification unit 254 specifies a score corresponding to the pattern identification information and outputs the specified score (step S204).

Next, effects of the information processing device 200 according to the second embodiment will be described. The information processing device 200 compares the sentence vector and the type of the conjunction extracted from the input text data 245 with the transition table 244 and specifies a score of the input text data 245. As a result, a paper of an essay or the like can be automatically scored on the basis of the transition of the sentence vector.

### [Third Embodiment]

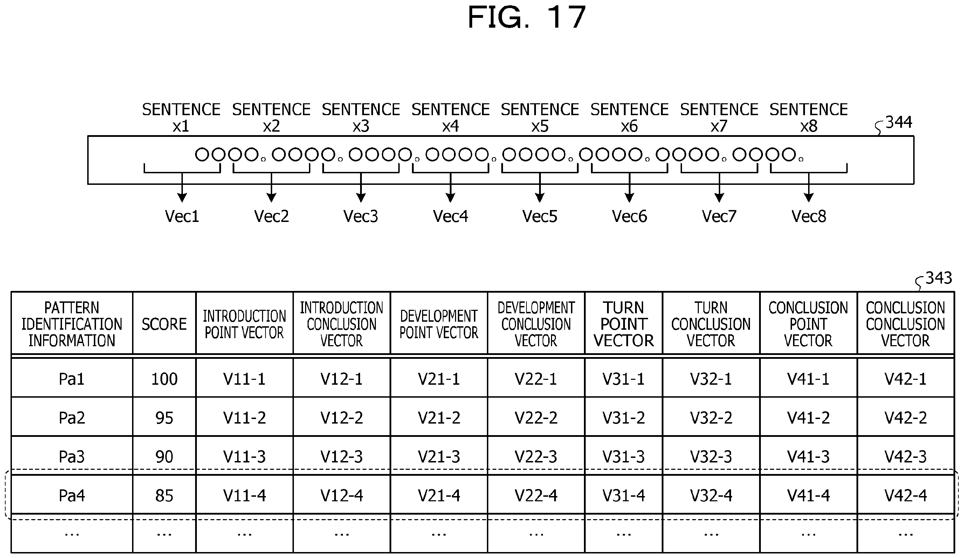

Next, an example of processing of an information processing device according to a third embodiment will be described. FIG. 17 is a diagram for explaining an example of the processing of the information processing device according to the third embodiment. The information processing device is a device that scores corresponding input text data 345 on the basis of a transition of a sentence vector of a paper of an essay.

The information processing device extracts a plurality of sentences on the basis of input text data 344 and calculates a sentence vector of each sentence. As in the first embodiment, sentences included in a text are delimited by punctuations. Furthermore, it is assumed that the input text data 344 include texts corresponding to introduction, development, turn, and conclusion.

For example, in the text corresponding to "introduction" of introduction, development, turn, and conclusion, a premise of the text is described. In the third embodiment, it is assumed that the text corresponding to "introduction" include a sentence describing a point (hereinafter, introduction point sentence) and a sentence describing a conclusion (hereinafter, introduction conclusion sentence). Regarding the input text data 344, the introduction point sentence is assumed as a sentence x1. The introduction conclusion sentence is assumed as a sentence x2.

In the text corresponding to "development", an introduction portion of a main issue is described. In the third embodiment, it is assumed that the text corresponding to "development" include a sentence describing a point (hereinafter, development point sentence) and a sentence describing a conclusion (hereinafter, development conclusion sentence). Regarding the input text data 344, the development point sentence is assumed as a sentence x3. The development conclusion sentence is assumed as a sentence x4.

In the text corresponding to "turn", events and unfoldment are described. In the third embodiment, it is assumed that the text corresponding to "turn" include a sentence describing a point (hereinafter, turn point sentence) and a sentence describing a conclusion (hereinafter, turn conclusion sentence). Regarding the input text data 344, the turn point sentence is assumed as a sentence x5. The turn conclusion sentence is assumed as a sentence x6.

In the text corresponding to "conclusion", how to cope with the main event is described. In the third embodiment, it is assumed that the text corresponding to "conclusion" include a sentence describing a point (hereinafter, conclusion point sentence) and a sentence describing a conclusion (hereinafter, conclusion conclusion sentence). Regarding the input text data 344, the conclusion point sentence is assumed as a sentence x7. The conclusion conclusion sentence is assumed as a sentence x8.

The information processing device calculates respective sentence vectors of the sentences x1 to x8. The sentence vector of the sentence x1 is assumed as "Vec1", the sentence vector of the sentence x2 is assumed as "Vec2", the sentence vector of the sentence x3 is assumed as "Vec3", and the sentence vector of the sentence x4 is assumed as "Vec4". The sentence vector of the sentence x5 is assumed as "Vec5", the sentence vector of the sentence x6 is assumed as "Vec6", the sentence vector of the sentence x7 is assumed as "Vec7", and the sentence vector of the sentence x8 is assumed as "Vec8".

The information processing device compares the sentence vector extracted from the input text data 344 with a transition table 343 and specifies a score of the input text data 344. The transition table 343 is a table that defines a score and a transition of a sentence vector of a model answer corresponding to this score. The score corresponds to "score".

For example, the transition table 343 includes pattern identification information, a score, an introduction point vector, an introduction conclusion vector, a development point vector, a development conclusion vector, a turn point vector, a turn conclusion vector, a conclusion point vector, and a conclusion conclusion vector.

The pattern identification information is information that uniquely identifies a pattern of a type of a conjunction related to a text to be a model answer and a transition of a sentence vector. The score indicates a score that is a text scoring result. The introduction point vector corresponds to a sentence vector of the introduction point sentence. The introduction conclusion vector corresponds to a sentence vector of the introduction conclusion sentence. The development point vector corresponds to a sentence vector of the development point sentence. The development conclusion vector corresponds to a sentence vector of the development conclusion sentence. The turn point vector corresponds to a sentence vector of the turn point sentence. The turn conclusion vector corresponds to a sentence vector of the turn conclusion sentence. The conclusion point vector corresponds to a sentence vector of the conclusion point sentence. The conclusion conclusion vector corresponds to a sentence vector of the conclusion conclusion sentence.

For example, the information processing device compares each introduction point vector V11-n of the transition table 343 with the vector Vec1 and specifies the most similar introduction point vector. Here, the introduction point vector that is the most similar to the vector Vec1 is assumed as "V11-4". The information processing device compares each introduction conclusion vector V12-n of the transition table 343 with the vector Vec2 and specifies the most similar introduction conclusion vector. Here, the introduction conclusion vector that is the most similar to the vector Vec2 is assumed as "V12-4".

The information processing device compares each development point vector V21-n of the transition table 343 with the vector Vec3 and specifies the most similar development point vector. Here, the development point vector that is the most similar to the vector Vec3 is assumed as "V21-4". The information processing device compares each development conclusion vector V22-n of the transition table 343 with the vector Vec4 and specifies the most similar development conclusion vector. Here, the development conclusion vector that is the most similar to the vector Vec4 is assumed as "V22-4".

The information processing device compares each turn point vector V31-n of the transition table 343 with the vector Vec5 and specifies the most similar turn point vector. Here, the turn point vector that is the most similar to the vector Vec5 is assumed as "V31-4". The information processing device compares each turn conclusion vector V32-n of the transition table 343 with the vector Vec5 and specifies the most similar turn conclusion vector. Here, the turn conclusion vector that is the most similar to the vector Vec5 is assumed as "V32-4".

The information processing device compares each conclusion point vector V41-n of the transition table 343 with the vector Vec7 and specifies the most similar conclusion point vector. Here, the conclusion point vector that is the most similar to the vector Vec7 is assumed as "V41-4". The information processing device compares each turn conclusion vector V42-n of the transition table 343 with the vector Vec8 and specifies the most similar conclusion conclusion vector. Here, the conclusion conclusion vector that is the most similar to the vector Vec8 is assumed as "V42-4".

By executing the processing described above, the information processing device determines that a transition of the sentence vector included in the input text data 344 corresponds to the pattern identification information "Pa4" of the transition table 343. Because a score corresponding to the pattern identification information "Pa4" is "85", the information processing device outputs the score of the input text data 344 as "85 points".

As described above, the information processing device according to the third embodiment compares the sentence vector extracted from the input text data 344 with the transition table 343 and specifies the score of the input text data 344. As a result, a paper of an essay or the like can be automatically scored on the basis of the transition of the sentence vector.

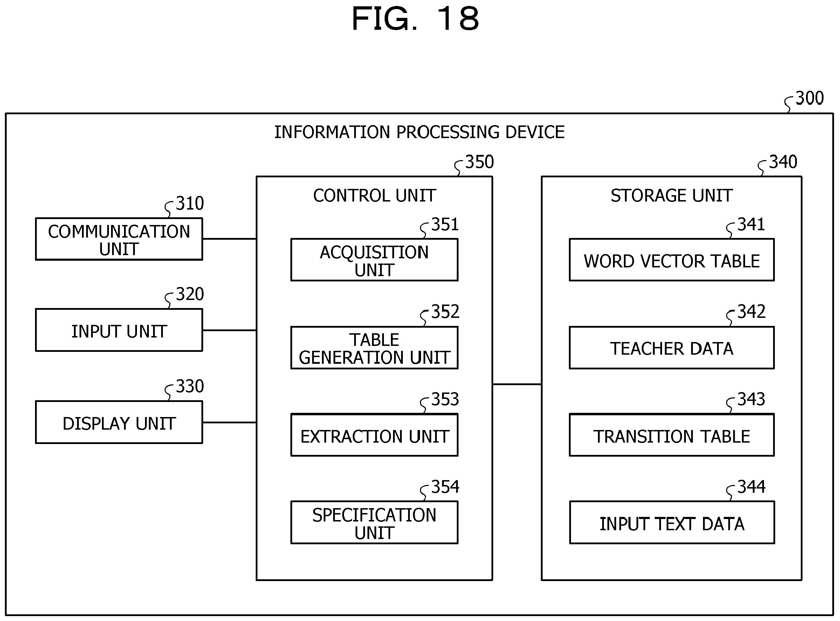

Next, a configuration of the information processing device according to the third embodiment will be described. FIG. 18 is a functional block diagram illustrating the configuration of the information processing device according to the third embodiment. As illustrated in FIG. 18, this information processing device 300 includes a communication unit 310, an input unit 320, a display unit 330, a storage unit 340, and a control unit 350.

The communication unit 310 is a processing unit that executes information communication with an external device (not illustrated) via a network. The communication unit 310 corresponds to a communication device such as an NIC. For example, the control unit 350 to be described below exchanges information with an external device via the communication unit 310.

The input unit 320 is an input device that inputs various types of information to the information processing device 300. The input unit 320 corresponds to a keyboard, a mouse, a touch panel, or the like. A user may input the input text data 344 by operating the input unit 320.

The display unit 330 is a display device that displays information output from the control unit 350. The display unit 330 corresponds to a liquid crystal display, an organic EL display, a touch panel, or the like.

The storage unit 340 includes a word vector table 341, teacher data 342, the transition table 343, and the input text data 344. The storage unit 340 corresponds to a semiconductor memory element such as a RAM or a flash memory, or a storage device such as an HDD.

The word vector table 341 is a table that associates a word with a word vector.

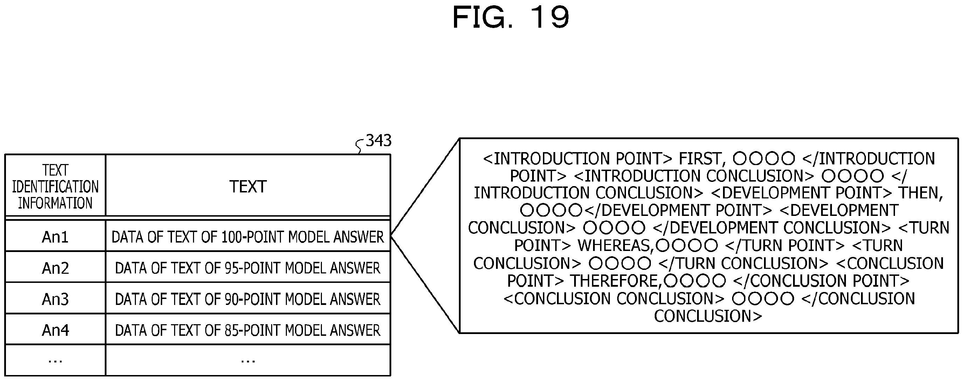

The teacher data 342 is a table that holds a model answer corresponding to each score. FIG. 19 is a diagram illustrating an example of a data structure of teacher data according to the third embodiment. As illustrated in FIG. 19, the teacher data 342 associates text identification information with a text. The text identification information is information that uniquely identifies a text to be a model answer. The text indicates data of the text of the model answer for each score. For example, a text of text identification information "An1" corresponds to data of a text of a model answer of which a scoring result is 100 points.

Note that it is assumed that, in a text of each model answer, each of an introduction point sentence, an introduction conclusion sentence, a development point sentence, a development conclusion sentence, a turn point sentence, a turn conclusion sentence, a conclusion point sentence, and a conclusion conclusion sentence be tagged in an identifiable manner. For example, the introduction point sentence is a sentence from a start tag "<introduction point>" to an end tag "</introduction point>". The introduction conclusion sentence is a sentence from a start tag "<introduction conclusion>" to an end tag "</introduction conclusion>". The development point sentence is a sentence from a start tag "<development point>" to an end tag "</development point>". The development conclusion sentence is a sentence from a start tag "<development conclusion>" to an end tag "</development conclusion >".

The turn point sentence is a sentence from a start tag "<turn point>" to an end tag "</turn point>". The turn conclusion sentence is a sentence from a start tag "<turn conclusion>" to an end tag "</turn conclusion>". The conclusion point sentence is a sentence from a start tag "<conclusion point>" to an end tag "</conclusion point>". The conclusion conclusion sentence is a sentence from a start tag "<conclusion conclusion>" to an end tag "</conclusion conclusion>".

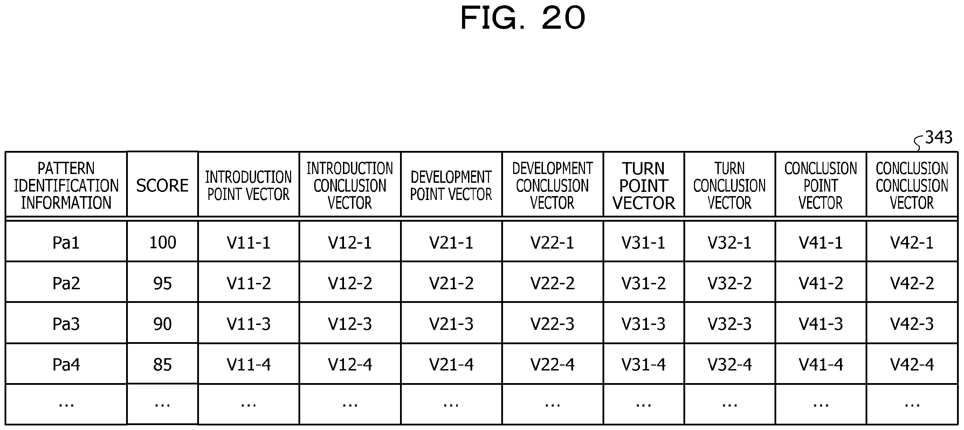

The transition table 343 is a table that defines a score and a transition of a sentence vector of a model answer corresponding to this score. FIG. 20 is a diagram illustrating an example of a data structure of a transition table according to the third embodiment. As illustrated in FIG. 20, this transition table 343 associates pattern identification information, a score, and each vector. The vectors include the introduction point vector, the introduction conclusion vector, the development point vector, the development conclusion vector, the turn point vector, the turn conclusion vector, the conclusion point vector, and the conclusion conclusion vector.

The pattern identification information is information that uniquely identifies a pattern of a transition of a sentence vector. The score indicates a score that is a text scoring result. The introduction point vector corresponds to a sentence vector of the introduction point sentence. The introduction conclusion vector corresponds to a sentence vector of the introduction conclusion sentence. The development point vector corresponds to a sentence vector of the development point sentence. The development conclusion vector corresponds to a sentence vector of the development conclusion sentence. The turn point vector corresponds to a sentence vector of the turn point sentence. The turn conclusion vector corresponds to a sentence vector of the turn conclusion sentence. The conclusion point vector corresponds to a sentence vector of the conclusion point sentence. The conclusion conclusion vector corresponds to a sentence vector of the conclusion conclusion sentence.

For example, each vector corresponding to pattern identification information "Pa1" is generated on the basis of the text identification information "An1" illustrated in FIG. 19. Each vector corresponding to pattern identification information "Pa2" is generated on the basis of the text identification information "An2" illustrated in FIG. 19. Each vector corresponding to pattern identification information "Pa3" is generated on the basis of the text identification information "An3" illustrated in FIG. 19. Each vector corresponding to pattern identification information "Pa4" is generated on the basis of the text identification information "An4" illustrated in FIG. 19.

The input text data 344 is data of a text including a plurality of sentences. The input text data 245 is data of a text to be scored.

The description returns to FIG. 18. The control unit 350 includes an acquisition unit 351, a table generation unit 352, an extraction unit 353, and a specification unit 354. The control unit 350 can be implemented by a CPU, an MPU, or the like. Furthermore, the control unit 350 can also be implemented by hard-wired logic such as an ASIC or an FPGA.

The acquisition unit 351 is a processing unit that acquires various types of data. For example, the acquisition unit 351 acquires the word vector table 341, the teacher data 342, the input text data 344, or the like via a network. The acquisition unit 351 stores the word vector table 341, the teacher data 342, the input text data 344, or the like in the storage unit 340.

The table generation unit 352 is a processing unit that generates the transition table 343 on the basis of the word vector table 341 and the teacher data 342. The table generation unit 352 stores the generated transition table 343 in the storage unit 340.

Processing in which the table generation unit 352 generates the introduction point vector, the introduction conclusion vector, the development point vector, the development conclusion vector, the turn point vector, the turn conclusion vector, the conclusion point vector, and the conclusion conclusion vector of the pattern identification information "Pa1" will be described.

The table generation unit 352 acquires a text of the text identification information "An1" from the teacher data 342, scans the acquired text, and specifies each tag.

The table generation unit 352 calculates a sentence vector of the sentence from the start tag "<introduction point>" to the end tag "</introduction point>" and assumes the sentence vector as the introduction point vector. The table generation unit 352 calculates a sentence vector of the sentence from the start tag °<introduction conclusion>" to the end tag "</introduction conclusion>" and assumes the sentence vector as the introduction conclusion vector.

The table generation unit 352 calculates a sentence vector of the sentence from the start tag "<development point>" to the end tag "</development point>" and assumes the sentence vector as the development point vector. The table generation unit 352 calculates a sentence vector of the sentence from the start tag "<development conclusion>" to the end tag "</development conclusion>" and assumes the sentence vector as the development conclusion vector.

The table generation unit 352 calculates a sentence vector of the sentence from the start tag "<turn point>" to the end tag "</turn point>" and assumes the sentence vector as the turn point vector. The table generation unit 352 calculates a sentence vector of the sentence from the start tag "<turn conclusion>" to the end tag "</turn conclusion>" and assumes the sentence vector as the turn conclusion vector.

The table generation unit 352 calculates a sentence vector of the sentence from the start tag "<conclusion point>" to the end tag "</conclusion point>" and assumes the sentence vector as the conclusion point vector. The table generation unit 352 calculates a sentence vector of the sentence from the start tag "<conclusion conclusion>" to the end tag "</conclusion conclusion>" and assumes the sentence vector as the conclusion conclusion vector.

Similarly, the table generation unit 352 calculates an introduction point vector, an introduction conclusion vector, a development point vector, a development conclusion vector, a turn point vector, a turn conclusion vector, a conclusion point vector, and a conclusion conclusion vector corresponding to another piece of pattern identification information.

The processing in which the table generation unit 352 calculates the sentence vector is similar to the processing for calculating the sentence vector described in the first embodiment. For example, the table generation unit 352 acquires the word vector of the word included in the sentence from the word vector table 341 and accumulates each word vector so as to calculate the sentence vector.

The extraction unit 353 is a processing unit that extracts a sentence vector included in the input text data 344. An example of processing of the extraction unit 353 will be described with reference to FIG. 17. The extraction unit 353 scans the input text data 245 and extracts the sentences x1 to x8 included in the input text data 245. Here, as an example, the sentences x1, x2, x3, x4, x5, x6, x7, and x8 are respectively set as the introduction point sentence, the introduction conclusion sentence, the development point sentence, the development conclusion sentence, the turn point sentence, the turn conclusion sentence, the conclusion point sentence, and the conclusion conclusion sentence.

The extraction unit 353 may associate respective sentences included in the input text data 344 with the introduction point sentence, the introduction conclusion sentence, the development point sentence, the development conclusion sentence, the turn point sentence, the turn conclusion sentence, the conclusion point sentence, and the conclusion conclusion sentence in any way. For example, the extraction unit 353 associates the respective sentences with the introduction point sentence, the introduction conclusion sentence, the development point sentence, the development conclusion sentence, the turn point sentence, the turn conclusion sentence, the conclusion point sentence, and the conclusion conclusion sentence on the basis of an order of sentences included in the input text data 344 from the head.

The extraction unit 353 calculates the sentence vectors Vec1 to Vec8 of the respective sentences x1 to x8 included in the input text data 344. The extraction unit 353 outputs an extraction result in which the types of the sentences corresponding to the respective calculated sentences x1 to x8 with the sentence vectors Vec1 to Vec8 to the specification unit 354. The types of the sentence indicate the introduction point sentence, the introduction conclusion sentence, the development point sentence, the development conclusion sentence, the turn point sentence, the turn conclusion sentence, the conclusion point sentence, and the conclusion conclusion sentence.

The specification unit 354 is a processing unit that specifies pattern identification information corresponding to a transition of the sentence vector extracted from the input text data 344 on the basis of a transition of each sentence vector extracted from the input text data 344 and the transition table 343.

The specification unit 354 compares each introduction point vector V11-n of the transition table 343 with the vector Vec1 of the introduction point sentence and specifies the most similar introduction point vector. Here, the introduction point vector that is the most similar to the vector Vec1 is assumed as "V11-4". The specification unit 354 specifies each introduction conclusion vector V12-n of the transition table 343 with the vector Vec2 of the introduction conclusion sentence and specifies the most similar introduction conclusion vector. Here, the introduction conclusion vector that is the most similar to the vector Vec2 is assumed as "V12-4".

The specification unit 354 compares each development point vector V21-n of the transition table 343 with the vector Vec3 of the development point sentence and specifies the most similar development point vector. Here, the development point vector that is the most similar to the vector Vec3 is assumed as "V21-4". The specification unit 354 compares each development conclusion vector V22-n of the transition table 343 with the vector Vec4 of the development conclusion sentence and specifies the most similar development conclusion vector. Here, the development conclusion vector that is the most similar to the vector Vec4 is assumed as "V22-4".

The specification unit 354 compares each turn point vector V31-n of the transition table 343 with the vector Vec5 of the turn point sentence and specifies the most similar turn point vector. Here, the turn point vector that is the most similar to the vector Vec5 is assumed as "V31-4". The specification unit 354 compares each turn conclusion vector V32-n of the transition table 343 with the vector Vec5 of the turn conclusion sentence and specifies the most similar turn conclusion vector. Here, the turn conclusion vector that is the most similar to the vector Vec5 is assumed as "V32-4".

The specification unit 354 compares each conclusion point vector V41-n of the transition table 343 with the vector Vec7 of the conclusion point sentence and specifies the most similar conclusion point vector. Here, the conclusion point vector that is the most similar to the vector Vec7 is assumed as "V41-4". The specification unit 354 compares each turn conclusion vector V42-n of the transition table 343 with the vector Vec8 of the conclusion conclusion sentence and specifies the most similar conclusion conclusion vector. Here, the conclusion conclusion vector that is the most similar to the vector Vec8 is assumed as "V42-4".

By executing the processing described above, the specification unit 354 determines that a transition of the sentence vector included in the input text data 344 corresponds to the pattern identification information "Pa4" of the transition table 343. Because a score corresponding to the pattern identification information "Pa4" is "85", the specification unit 354 outputs the score of the input text data 344 as "85 points". The specification unit 354 may output the score to the display unit 330 and display the score on the display unit 330 or may notify an external device of the score.

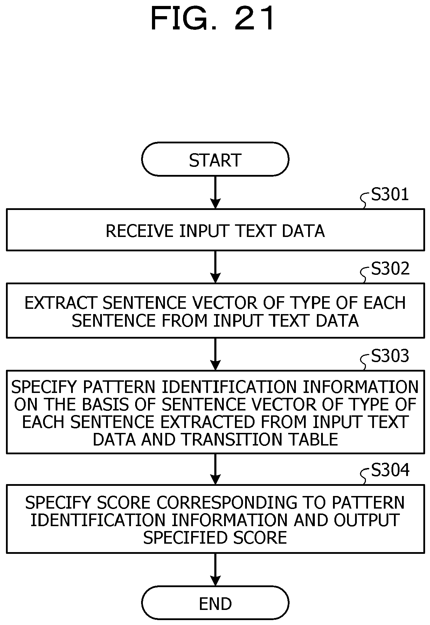

Next, an example of a processing procedure of the information processing device 300 according to the third embodiment will be described. FIG. 21 is a flowchart illustrating a processing procedure of the information processing device according to the third embodiment. As illustrated in FIG. 21, the acquisition unit 351 of the information processing device 300 acquires the input text data 344 (step S301).

The extraction unit 353 of the information processing device 300 extracts a sentence vector of the type of each sentence from the input text data 344 (step S302). The sentence vector of the type of each sentence extracted in step S302 includes the introduction point vector, the introduction conclusion vector, the development point vector, the development conclusion vector, the turn point vector, the turn conclusion vector, the conclusion point vector, and the conclusion conclusion vector.

The specification unit 354 of the information processing device 300 specifies pattern identification information on the basis of the sentence vector of the type of each sentence extracted from the input text data 344 and the transition table 343 (step S303). The specification unit 354 specifies a score corresponding to the pattern identification information and outputs the specified score (step S304).

Next, effects of the information processing device 300 according to the third embodiment will be described. The information processing device 300 compares the sentence vector of the type of each sentence extracted from the input text data 344 described in a form of introduction, development, turn, and conclusion with the transition table 343 and specifies a score of the input text data 344. As a result, a paper of an essay or the like can be automatically scored on the basis of the transition of the sentence vector.

By the way, the information processing device 300 according to the third embodiment determines the pattern identification information on the basis of the introduction point vector, the introduction conclusion vector, the development point vector, the development conclusion vector, the turn point vector, the turn conclusion vector, the conclusion point vector, and the conclusion conclusion vector. However, the embodiment is not limited to this. Similarly to the information processing device 200 described in the second embodiment, the information processing device 300 may further determine the pattern identification information using the type of the conjunction.

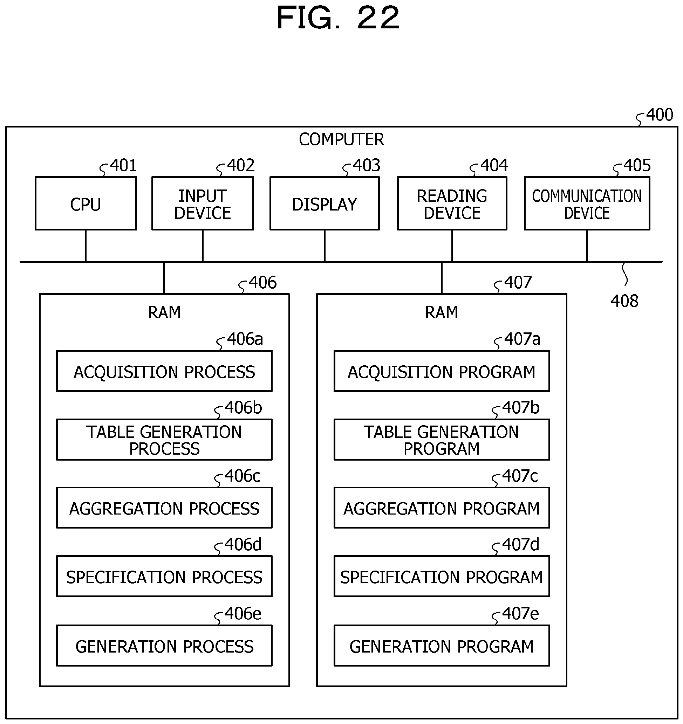

Next, an example of a hardware configuration of a computer that implements functions similar to those of the information processing device 100 described in the above embodiment will be described. FIG. 22 is a diagram illustrating an example of a hardware configuration of a computer that implements functions similar to those of an information processing device according to the first embodiment.

As illustrated in FIG. 22, a computer 400 includes a CPU 401 that executes various types of arithmetic processing, an input device 402 that receives data input from a user, and a display 403. Furthermore, the computer 400 includes a reading device 404 that reads a program and the like from a storage medium and a communication device 405 that exchanges data with an external device via a wired or wireless network. Furthermore, the computer 400 includes a RAM 406 that temporarily stores various types of information and a hard disk device 407. Then, each of the devices 401 to 407 is connected to a bus 408.

The hard disk device 407 includes an acquisition program 407a, a table generation program 407b, an aggregation program 407c, a specification program 407d, and a generation program 407e. Furthermore, the CPU 401 reads each of the programs 407a to 407e, and develops each of the programs 407a to 407e to the RAM 406.

The acquisition program 407a functions as an acquisition process 406a. The table generation program 407b functions as a table generation process 406b. The aggregation program 407c functions as an aggregation process 406c. The specification program 407d functions as a specification process 406d. The generation program 407e functions as a generation process 406e.

Processing of the acquisition process 406a corresponds to the processing of the acquisition unit 105. Processing of the table generation process 406b corresponds to the processing of the table generation unit 106. The aggregation process 406c corresponds to the processing of the aggregation unit 151. The specification process 406d corresponds to the processing of the specification unit 152. The generation process 405e corresponds to the processing of the generation unit 153.

Note that each of the programs 407a to 407e does not necessarily have to be stored in the hard disk device 407 from the beginning. For example, each of the programs is stored in a "portable physical medium" to be inserted in the computer 400, such as a flexible disk (FD), a CD-ROM, a DVD, a magnetooptical disk, or an IC card. Then, the computer 400 may read and execute each of the programs 407a to 407e.

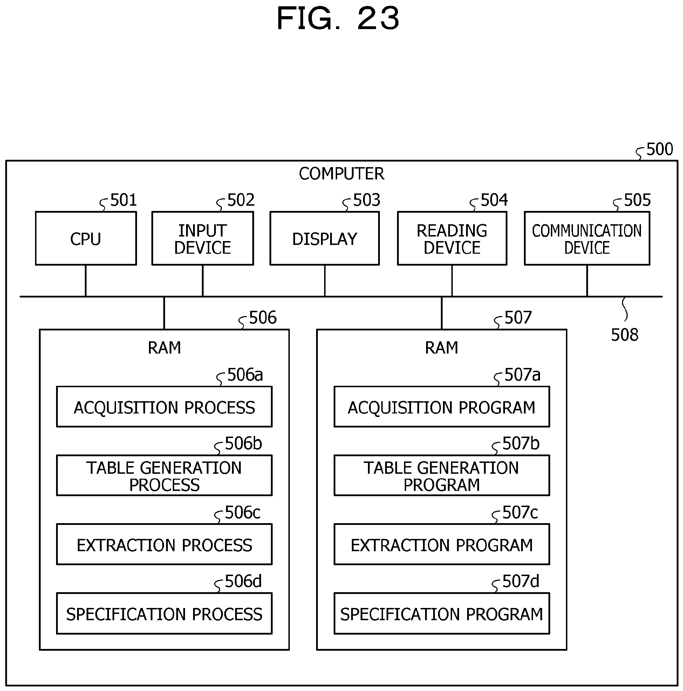

Subsequently, an example of a hardware configuration of a computer that implements functions similar to those of the information processing device 200 (300) described in the second and third embodiments described above will be described. FIG. 23 is a diagram illustrating an example of a hardware configuration of a computer that implements functions similar to those of the information processing devices according to the second and third embodiments.

As illustrated in FIG. 23, a computer 500 includes a CPU 501 that executes various types of arithmetic processing, an input device 502 that receives data input from a user, and a display 503. Furthermore, the computer 500 includes a reading device 504 that reads a program and the like from a storage medium and a communication device 505 that exchanges data with an external device via a wired or wireless network. Furthermore, the computer 500 includes a RAM 506 that temporarily stores various types of information and a hard disk device 507. Then, each of the devices 501 to 507 is connected to a bus 508.

The hard disk device 507 includes an acquisition program 507a, a table generation program 507b, an extraction program 507c, and a specification program 507d. Furthermore, the CPU 501 reads each of the programs 507a to 507e and develops the programs to the RAM 506.

The acquisition program 507a functions as an acquisition process 506a. The table generation program 507b functions as a table generation process 506b. The extraction program 507c functions as an extraction process 506c. The specification program 507d functions as a specification process 506d.

Processing of the acquisition process 506a corresponds to the processing of the acquisition unit 251. Processing of the table generation process 506b corresponds to the processing of the table generation unit 252. Processing of the extraction process 506c corresponds to the processing of the extraction unit 253. Processing of the specification process 506d corresponds to the processing of the specification unit 254.

Note that each of the programs 507a to 507d does not necessarily have to be stored in a hard disk device 707 from the beginning. For example, each of the programs is stored in a "portable physical medium" to be inserted in the computer 500, such as a flexible disk (FD), a CD-ROM, a DVD, a magnetooptical disk, or an IC card. Then, the computer 500 may read and execute each of the programs 507a to 507d.

### REFERENCE SIGNS LIST

- 105, 251, 351: acquisition unit
- 106, 252, 352: table generation unit
- 110, 210, 310: communication unit
- 120, 220, 320: input unit
- 130, 230, 330: display unit
- 140, 240, 340: storage unit
- 141, 241, 341: word vector table
- 142, 243, 342: teacher data
- 143: aggregated data
- 144: homophone vector table
- 145, 245, 344: input text data
- 146: homophone table
- 147: conjunction vector table
- 150, 250, 350: control unit
- 151: aggregation unit
- 152: specification unit
- 153: generation unit
- 242: conjunction table
- 244, 343: transition table
- 253, 353: extraction unit
- 254, 354: specification unit

Further preferred embodiments are E1 to E10 as follows:
E1. An information processing program for causing a computer to execute processing comprising:
   extracting first sentence vectors of a plurality of first sentences included in a first text;
   specifying a second sentence of which a tendency of a vector is different from the plurality of first sentences from among a plurality of the second sentences on the basis of the extracted first sentence vectors and second sentence vectors of the plurality of second sentences included in a second text;
   extracting a word that matches a homophone or a conjunction stored in a storage device from among words included in the specified second sentence; and
   generating a second sentence of which a tendency of a vector is the same as or similar to the vectors of the plurality of first sentences by converting the extracted word into a word associated with the homophone or the conjunction stored in the storage device.
E2. The information processing program according to embodiment E1, wherein in a case where a plurality of homophones or conjunctions exists for the word included in the second sentence, the processing of generating the second sentence generates a plurality of third sentences on the basis of the plurality of homophones or conjunctions.
E3. The information processing program according to embodiment E2, wherein the processing of generating the second sentence selects any one of the third sentences as the second sentence of which the tendency is the same as or similar to the plurality of first sentences on the basis of sentence vectors of the plurality of generated third sentences and the first sentence vectors of the plurality of first sentences.
E4. The information processing program according to any one of embodiments E1 to E3, wherein the storage device associates a relationship between the first sentence vectors of the plurality of first sentences with respective text vectors of a plurality of the different first texts, and the processing of extracting further extracts a tendency of the first sentence vectors of the plurality of first sentences on the basis of a text vector of the second text.
E5. An information processing program for causing a computer to execute processing comprising:
   extracting a sentence vector included in a certain text;
   specifying a pattern that matches a transition of the sentence vector included in the certain text from among a plurality of patterns regarding transitions of a plurality of sentence vectors stored in a storage device; and
   outputting a score stored in association with the specified pattern as a score of the certain text.
E6. The information processing program according to embodiment E5, wherein
   the storage device stores a plurality of patterns in which a conjunction is associated with a transition of a sentence vector,
   the processing of extracting extracts a conjunction and the sentence vector included in a certain text, and
   the processing of specifying specifies a pattern that matches the conjunction and the transition of the sentence vector included in the certain text from among the plurality of patterns, in which the conjunction and the transition of the sentence vector are associated, stored in the storage device.
E7. An information processing method for causing a computer to execute processing comprising:
   extracting first sentence vectors of a plurality of first sentences included in a first text;
   specifying a second sentence of which a tendency of a vector is different from the plurality of first sentences from among a plurality of the second sentences on the basis of the extracted first sentence vectors and second sentence vectors of the plurality of second sentences included in a second text;
   extracting a word that matches a homophone or a conjunction stored in a storage device from among words included in the specified second sentence; and
   generating a second sentence of which a tendency of a vector is the same as or similar to the vectors of the plurality of first sentences by converting the extracted word into a word associated with the homophone or the conjunction stored in the storage device.
E8. An information processing method for causing a computer to execute processing comprising:
   extracting a sentence vector included in a certain text;
   specifying a pattern that matches a transition of the sentence vector included in the certain text from among a plurality of patterns regarding transitions of a plurality of sentence vectors stored in a storage device; and
   outputting a score stored in association with the specified pattern as a score of the certain text.
E9. An information processing device comprising:
   a specification unit that
      extracts first sentence vectors of a plurality of first sentences included in a first text, and
      specifies a second sentence of which a tendency of a vector is different from the plurality of first sentences from among a plurality of the second sentences on the basis of the extracted first sentence vectors and second sentence vectors of the plurality of second sentences included in a second text; and
   a generation unit that
      extracts a word that matches a homophone or a conjunction stored in a storage device from among words included in the specified second sentence, and
      generates a second sentence of which a tendency of a vector is the same as or similar to the vectors of the plurality of first sentences by converting the extracted word into a word associated with the homophone or the conjunction stored in the storage device.
E10. An information processing device comprising:
   an extraction unit that extracts a sentence vector included in a certain text; and
   an specification unit that
      specifies a pattern that matches a transition of the sentence vector included in the certain text from among a plurality of patterns regarding transitions of a plurality of sentence vectors stored in a storage device, and
      outputs a score stored in association with the specified pattern as a score of the certain text.

## Claims

1. An information processing program for causing a computer to execute processing comprising:
extracting a sentence vector included in a certain text;
specifying a pattern that matches a transition of the sentence vector included in the certain text from among a plurality of patterns regarding transitions of a plurality of sentence vectors stored in a storage device; and
outputting a score stored in association with the specified pattern as a score of the certain text.

2. The information processing program according to claim 2, wherein
the storage device stores a plurality of patterns in which a conjunction is associated with a transition of a sentence vector,
the processing of extracting extracts a conjunction and the sentence vector included in a certain text, and
the processing of specifying specifies a pattern that matches the conjunction and the transition of the sentence vector included in the certain text from among the plurality of patterns, in which the conjunction and the transition of the sentence vector are associated, stored in the storage device.

3. An information processing method for causing a computer to execute processing comprising:
extracting a sentence vector included in a certain text;
specifying a pattern that matches a transition of the sentence vector included in the certain text from among a plurality of patterns regarding transitions of a plurality of sentence vectors stored in a storage device; and
outputting a score stored in association with the specified pattern as a score of the certain text.

4. An information processing device comprising:
a specification unit that
extracts first sentence vectors of a plurality of first sentences included in a first text, and
specifies a second sentence of which a tendency of a vector is different from the plurality of first sentences from among a plurality of the second sentences on the basis of the extracted first sentence vectors and second sentence vectors of the plurality of second sentences included in a second text; and
a generation unit that
extracts a word that matches a homophone or a conjunction stored in a storage device from among words included in the specified second sentence, and
generates a second sentence of which a tendency of a vector is the same as or similar to the vectors of the plurality of first sentences by converting the extracted word into a word associated with the homophone or the conjunction stored in the storage device.
